# EUROPÄISCHE PATENTANMELDUNG

(11) **EP 4 287 468 A1**
(43) Veröffentlichungstag der Anmeldung: **06.12.2023**
(21) Anmeldenummer: 23176189.1
(22) Anmeldetag: 30.05.2023
(51) Int. Cl.: H02K 3/50, H02K 3/52, H02K 1/14, H02K 3/28, H02K 11/21, H02K 5/22

(54) **ELEKTROMOTORSYSTEM**

(30) Priorität: 31.05.2022 LU 502200
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Elektromotorsystem beinhaltend wenigstens einen ersten und einen zweiten Elektromotor, wobei der erste Elektromotor erste Statorspulen aufweist und der zweite Elektromotor zweite Statorspulen aufweist und wobei der erste Elektromotor und der zweite Elektromotor denselben Statorkern haben, der die ersten und zweiten Statorspulen trägt. Das Elektromotorsystem zeichnet sich dadurch aus, dass eine einstückige Anschlussbaugruppe mehrere voneinander elektrisch isolierte Stromschienen aufweist, wobei an jede der Stromschienen wenigstens zwei der ersten Statorspulen oder wenigstens zwei der zweiten Statorspulen elektrisch leitend angeschlossen sind.

## Beschreibung

Die Erfindung betrifft ein Elektromotorsystem beinhaltend wenigstens einen ersten und einen zweiten Elektromotor, wobei der erste Elektromotor erste Statorspulen aufweist und der zweite Elektromotor zweite Statorspulen aufweist und wobei der erste Elektromotor und der zweite Elektromotor denselben Statorkern haben, der die ersten und zweiten Statorspulen trägt.

Es sind Gleichstrommotore bekannt, deren Stator aus einzelnen Statorsegmenten zusammengesetzt sind, wobei die Statorsegmente unterschiedlichen Teilmotoren zugeordnet sind. Beispielsweise ist aus DE 10 2015 120 373 A1 ein bürstenloser Gleichstrommotor bekannt, der einen ersten Teilmotor und einen zweiten Teilmotor aufweist. Der erste Teilmotor und der zweite Teilmotor haben einen gemeinsamen Läufer und jeweils einen eigenen Stator. Der Stator des jeweiligen Teilmotors hat eine Vielzahl von Zähnen und eine Vielzahl von Wicklungen. Die Zähne des ersten Teilmotors und die Zähne des zweiten Teilmotors sind in einer Umfangsrichtung verschachtelt angeordnet oder sind in einer axialen Richtung nebeneinander angeordnet. Der erste Teilmotor und der zweite Teilmotor sind derart konfiguriert, dass sie als ein einziger Motor arbeiten, um eine normale Leistung abzugeben. Wenn einer der Teilmotoren ausfällt, kann der andere Teilmotor unabhängig davon weiter betrieben werden, um die Zuverlässigkeit und die Sicherheit des bürstenlosen Gleichstrommotors zu verbessern.

Aus DE 31 40 034 C2 ist eine kollektorlose Gleichstrommaschine mit verteilter Wicklung bekannt, die mit einer Anzahl von voneinander unabhängigen Statorwicklungen versehen ist, die eine kontinuierliche Arbeitsfolge auch für den Fall sicherstellen, dass in einer der Wicklungen oder in dem die Wicklungen speisenden Versorgungsstromkreis ein Fehler auftritt. Die Gleichstrommaschine beinhaltet einen permanentmagnetischen Rotor mit mindestens n = 2 Polpaaren und einen Stator, dessen Statorwicklungen in n Wicklungssätze zusammengefasst sind. Durch die Wicklungssätze, die unabhängig voneinander von einer getrennten Stromversorgungseinrichtung angesteuert werden, arbeitet die Maschine auch bei Ausfall eines oder mehrerer Stromkreise weiter. Dies hat den Vorteil, dass die Funktionsfähigkeit der Gleichstrommaschine auch bei Ausfall mehrerer Wicklungen durch Unterbrechung oder Kurzschluss erhalten bleibt. Hierzu sind die Wicklungssätze in einem Abstand voneinander anzuordnen, der ausreicht, um ihre gegenseitige magnetische Beeinflussung auf einen vernachlässigbaren Wert zu reduzieren. Die Gleichstrommaschine ist jedoch kompliziert und sehr aufwändig in der Herstellung.

Aus der internationalen Patentanmeldung WO 2021 148 451 A1 ist ein Stator eines Elektromotors bekannt. Der Stator weist einen Statorgrundkörper auf, der Spulen mit jeweils zwei Spulenenden einer mehrphasigen Statorwicklung trägt. Der Stator weist außerdem eine stirnseitig am Statorgrundkörper angeordnete Kontaktvorrichtung mit einem Verschaltungsgehäuse auf, das eine Anzahl von Stromschienen zur Verschaltung der Spulen und eine Anzahl von Phasenanschlüssen aufnimmt, wobei jede Phase der Statorwicklung von mindestens einer der Spulen und mindestens einer der Stromschienen sowie einem der Phasenanschlüsse gebildet ist, und wobei die Abmessungen der Stromschienen derart eingestellt sind, dass der elektrische Widerstand aller Phasen der Statorwicklung gleich ist. Die Statorwicklung kann redundant ausgebildet sein, wobei mittels einer Motorelektronik Im elektromotorischen Betrieb erzeugen die jeweils bestromten Wicklungen der Statorwicklung ein statorseitiges Magnetfeld, welches in Wechselwirkung mit Permanentmagneten eines um die zentrale Stator- oder Motorachse rotierenden Rotors tritt. Mittels einer Motorelektronik kann auf andere Phasen U, V, W zu deren Bestromung umgeschaltet werden, wenn in Folge eines Defektes einzelne Phasen U, V, W ausfallen.

Aus der Patentanmeldung US 2019 033 43 99 A1 ist ein Elektromotor bekannt, bei dem ein Ungleichgewicht der elektromagnetischen Kraft auch dann verhindert wird, wenn eine Abnormalität in einem elektrischen Energiesystem auftritt. Der Motor ist mit einer Vielzahl von elektrischen Energiesystemen verbindbar und umfasst: einen Stator mit einer Vielzahl von Erregermagnetpolen, die in einer Umfangsrichtung angeordnet sind, und Spulen, die an den jeweiligen Polen vorgesehen sind, wobei die Spulen für jedes der Systeme einen Satz von drei oder mehr Phasenspulen enthalten, wobei die Spulen die jeweiligen Ströme von drei oder mehr Phasen des entsprechenden Systems führen; und einen Rotor, der relativ zum Stator drehbar ist. Die Spulen des Stators sind so angeordnet, dass die in Umfangsrichtung benachbarten Spulen unterschiedliche Phasen haben und verschiedenen Systemen zugeordnet sind.

Die internationale Patentanmeldung WO 2019 138857 A1 offenbart einen Stator mit einem ringförmigen Statorkern, einer Vielzahl von Spulen, Stromschienen und einen Verbindungssockel. Der Statorkern hat in der Umfangsrichtung eine Vielzahl von Zähnen. Die Stromschienen stellen eine elektrische Verbindung zu einer Steuerschaltung her, um die Stromzufuhr zu den mehreren Spulen zu steuern. Der Verbindungssockel verbindet die Stromschiene mit der Vielzahl von Spulen. In einem Motor können zur Realisierung einer Redundanz ein erster Stator und ein zweiter Stator vorhanden sein, wobei der Rotor bei einem Ausfalls eines Stators mittels des anderen Stators rotiert werden kann.

Es ist die Aufgabe der vorliegenden Erfindung, ein Elektromotorsystem anzugeben, das besonders zuverlässig und sicher ist.

Die Aufgabe wird durch ein Elektromotorsystem gelöst, das dadurch gekennzeichnet ist, dass eine einstückige Anschlussbaugruppe mehrere voneinander elektrisch isolierte Stromschienen aufweist, wobei an jede der Stromschienen wenigstens zwei der ersten Statorspulen oder wenigstens zwei der zweiten Statorspulen elektrisch leitend angeschlossen sind.

Das erfindungsgemäße Elektromotorsystem hat den ganz besonderen Vorteil, dass Kurzschlüsse der Anschlussleitungen der Statorwicklungen, beispielsweise gegen das Gehäuse oder gegeneinander, ganz besonders zuverlässig vermieden sind, wodurch gewährleistet ist, dass selbst in einem Fehlerfall wenigstens einer der Elektromotore des Elektromotorsystems funktionsfähig bleibt. Es hat sich gezeigt, dass es bei einem Elektromotorsystem der eingangs genannten Art ganz besonders wichtig ist, die Statorspulen jedes Elektromotors des Elektromotorsystems und deren Zuleitungen besonders sicher und zuverlässig gegen die Statorspulen und Zuleitungen der anderen Elektromotore des Elektromotorsystems zu isolieren. Hierbei ist die besondere Komplikation zu berücksichtigen, dass bei einem Elektromotorsystem der eingangs genannten Art eine größere Anzahl von Zuleitungen und elektrischen Verbindungen erforderlich ist, um den ersten und den zweiten Elektromotor (und ggf. beliebig viele weitere Elektromotore des Elektromotorsystems) simultan oder sequentiell betreiben zu können.

Bei einer besonders vorteilhaften Ausführung sind unter den Stromschienen mehrere erste Stromschienen vorhanden, wobei an jede der ersten Stromschienen wenigstens zwei der ersten Statorspulen elektrisch leitend angeschlossen sind. Außerdem sind bei dieser Ausführung unter den Stromschienen mehrere zweite Stromschienen vorhanden, wobei an jede der zweiten Stromschienen wenigstens zwei der zweiten Statorspulen elektrisch leitend angeschlossen sind.

Bei einer alternativen Ausführung sind unter den Stromschienen ausschließlich mehrere erste Stromschienen vorhanden sind, wobei an jede der ersten Stromschienen wenigstens zwei der ersten Statorspulen elektrisch leitend angeschlossen sind. Außerdem ist bei dieser Ausführung vorgesehen, dass eine weitere einstückige Anschlussbaugruppe ausschließlich mehrere zweite Stromschienen aufweist, wobei an jede der zweiten Stromschienen wenigstens zwei der zweiten Statorspulen elektrisch leitend angeschlossen sind.

Bei einer ganz besonders sicheren und zuverlässigen Ausführung weist die einstückige Baugruppe eine aus einem elektrisch isolierenden Material hergestellte Einhausung aufweist, die die Stromschienen einhaust. Entsprechend kann alternativ oder zusätzlich vorteilhaft vorgesehen sein, dass die weitere einstückige Anschlussbaugruppe eine aus einem elektrisch isolierenden Material hergestellte weitere Einhausung auf, die die zweiten Stromschienen einhaust.

Der Statorkern kann vorteilhaft axial zwischen der Einhausung und der weiteren Einhausung angeordnet sein. Eine solche Ausführung hat den Vorteil, dass sie besonders kompakt ist. Alternativ oder zusätzlich kann der Statorkern axial zwischen der ersten und zweiten Anschlussbaugruppe angeordnet sein.

Die Einhausung kann mehrere voneinander beabstandete Öffnungen aufweisen, durch die jeweils elektrisch leitende Anschlusselemente verlaufen, von denen jedes elektrisch leitend mit einer der Stromschienen verbunden ist. Auch die weitere Einhausung kann mehrere voneinander beabstandete Öffnungen aufweisen, durch die die zweiten elektrisch leitenden Anschlusselemente verlaufen, von denen jedes elektrisch leitend mit einer der zweiten Stromschienen verbunden ist.

Bei einer besonders vorteilhaften Ausführung ist die Öffnungsfläche jeder Öffnung jeweils genauso groß, wie die Querschnittsfläche des durch sie hindurch verlaufenden Anschlusselements in der Öffnungsebene oder jede Öffnung höchstens 10 mal, insbesondere höchstens 5 mal, so groß, wie die Querschnittsfläche des durch sie hindurch verlaufenden

Anschlusselements in der Öffnungsebene. Es hat sich gezeigt, dass größere Öffnungen weniger sicher und außerdem nicht erforderlich sind.

Die Einhausung kann beispielsweise durch Eingießen der Stromschienen mit dem elektrisch isolierenden Material hergestellt sein, wobei das elektrisch isolierende Material nach dem Eingießen ausgehärtet ist. Auch die weitere Einhausung kann alternativ oder zusätzlich durch Eingießen der zweiten Stromschienen mit dem elektrisch isolierenden Material hergestellt sein, wobei das elektrisch isolierende Material nach dem Eingießen ausgehärtet ist.

Alternativ kann die Einhausung durch ein an den Stromschienen befestigtes Gehäuse gebildet sein. Auch die weitere Einhausung kann durch ein an den zweiten Stromschienen befestigtes Gehäuse gebildet sein.

Bei einer ganz besonders kompakten und sicheren Ausführung deckt die Anschlussbaugruppe den Statorkern samt den ersten und zweiten Statorspulen, insbesondere in Axialrichtung, ab. Auf diese Weise ist der Statorkern samt den ersten und zweiten Statorspulen besonders gut geschützt angeordnet. Alternativ oder zusätzlich kann vorteilhaft vorgesehen sein, dass die weitere Anschlussbaugruppe den Statorkern samt den ersten und zweiten Statorspulen, insbesondere in Axialrichtung, abdeckt.

Insbesondere kann der Statorkern radial nach innen gerichtete Zähne aufweisen, die die Statorspulen tragen und die an einem rohrförmigen Umfangsabschnitt des Statorkerns angeordnet sind. Bei einer solchen Ausführung fungiert bereits der Umfangsabschnitt in radialer Richtung als Schutz für die Statorspulen. In axialer Richtung kann vorteilhafter Weise die Einhausung als wirksamer Schutz fungieren. Zusätzlich kann vorteilhaft vorgesehen sein, dass die Einhausung den Statorkern auch in radialer Richtung wenigstens teilweise abdeckt.

Die Anschlussbaugruppe und/oder die weitere Anschlussbaugruppe können axial beabstandet zu dem Statorkern angeordnet sein. Hierdurch verbleibt vorteilhaft dazwischen nutzbarer Bauraum, in dem gut geschützt beispielsweise elektrische Leitungen, Drähte, Wickeldraht, Steckverbinder und/oder elektrische Bauteile angeordnet werden können.

Die Einhausung kann vorteilhaft eine Deckelwandung aufweisen, die sich in radialer Richtung erstreckt und/oder die senkrecht zur Axialrichtung des Elektromotorsystems angeordnet ist. Die Deckelwandung kann insbesondere als Kreisscheibe ausgebildet sein oder ringförmig ausgebildet sein. Alternativ oder zusätzlich kann vorteilhaft vorgesehen sein, dass die weitere Einhausung eine weitere Deckelwandung aufweist, die sich in radialer Richtung erstreckt und/oder die senkrecht zur Axialrichtung angeordnet ist.

Insbesondere kann vorteilhaft vorgesehen sein, dass die Deckelwandung und/oder die weitere Deckelwandung die Öffnungen aufweist, durch die die elektrisch leitenden Anschlusselemente verlaufen.

Vorzugsweise verläuft durch jede Öffnung nur ein einziges der Anschlusselemente. Auf diese Weise wird eine besonders gute, sichere und zuverlässige Isolierung der verschiedenen spannungsführenden Komponenten voneinander erreicht.

Bei einer besonders vorteilhaften Ausführung weisen die Einhausung und/oder die weitere Einhausung zwischen benachbarten Öffnungen angeordnete Abschirmwände auf. Die Abschirmwände ragen vorzugsweise in dieselbe Richtung, wie die jeweils benachbarten elektrisch leitenden Anschlusselemente. Vorzugsweise stehen die Abschirmwände in dieser Richtung über die elektrisch leitenden Anschlusselemente vor. Auf diese Weise ist zuverlässig verhindert, dass benachbarte elektrisch leitende Anschlusselemente miteinander in Kontakt kommen können. Besonders kompakt und bauraumsparend ist eine Ausführung, bei der sich die Abschirmwände in axialer und radialer Richtung erstrecken.

Die Abschirmwände können vorteilhaft senkrecht zur Deckelwandung bzw. senkrecht zur weiteren Deckelwandung angeordnet sein. Alternativ oder zusätzlich können die Abschirmwände unmittelbar an der Deckelwandung bzw. der weiteren Deckelwandung angeordnet sein. Bei einer ganz besonders einfach herstellbaren und einfach einsetzbaren Ausführung sind die Abschirmwände zusammen mit der Deckelwandung bzw. der weiteren Deckelwandung einstückig, beispielsweise als Spritzgußbauteil, hergestellt.

Bei einer besonders vorteilhaften Ausführung weist die Einhausung einen, insbesondere an der Deckelwandung, angeordneten Rohrabschnitt auf. Alternativ oder zusätzlich kann die weitere Einhausung einen, insbesondere an der weiteren Deckelwandung, angeordneten Rohrabschnitt aufweisen. Der Rohrabschnitt kann derart ausgebildet sein, dass er an einer Außenumfangsfläche des Statorkerns oder an einer Innenumfangsfläche des Statorkerns anliegt und/oder diese radial abdeckt. Insbesondere können auch zwei Rohrabschnitte vorhanden sein, von denen einer an einer Außenumfangsfläche des Statorkern anliegt und/oder diese radial abdeckt und der andere an einem Innenumfang des Statorkerns anliegt und/oder diesen radial abdeckt. Bei einer solchen Ausführung kann die Einhausung (bzw. die weitere Einhausung) vorteilhaft auf den die Statorspulen tragenden Statorkern (und ggf. vorhandene Stromschienen), insbesondere axial, aufgesteckt werden.

Die Öffnungen, durch die die elektrisch leitenden Anschlusselemente verlaufen, können sich vorteilhaft in axialer Richtung erstrecken. Eine solche Ausführung der Einhausung und/oder der weiteren Einhausung kann besonders Vorteilhaft dazu ausgebildet sein, aufgesteckt zu werden. Insbesondere können die Einhausung und/oder die weitere Einhausung vorteilhaft dazu ausgebildet sein derart aufgesteckt zu werden, dass die räumlich entsprechend den Öffnungen angeordneten und (vorzugsweise axial) hervorstehenden elektrisch leitenden Anschlusselemente beim Aufsteckvorgang automatisch durch die Öffnungen geführt werden. Es ist jedoch auch möglich, dass die Öffnungen in radialer Richtung verlaufen. Bei einer besonderen Ausführung gibt es sowohl Öffnungen, die in radialer Richtung verlaufen, als auch Öffnungen, die in axialer Richtung verlaufen.

Bei einer ganz besonders vorteilhaften Ausführung, die eine besonders gut geordnete elektrische Anschließbarkeit und eine ganz besonders gute Isolierung ermöglicht, ist der Statorkern samt den Statorspulen (und ggf. beidseitige vorhandenen Stromschienen) axial zwischen der Anschlussbaugruppe und der weiteren Anschlussbaugruppe angeordnet. Insbesondere bei einer solchen Ausführung kann vorteilhaft vorgesehen sein, dass alle ersten elektrisch leitenden Anschlusselemente durch die Öffnungen der Einhausung verlaufen und dass alle zweiten elektrisch leitenden Anschlusselemente durch die Öffnungen der weiteren Einhausung verlaufen.

Die elektrisch leitenden Anschlusselemente können jeweils als Stift oder als Blechstreifen oder Strangpressprofil ausgebildet sein. Insbesondere können die elektrisch leitenden Anschlusselemente steif und/oder federelastisch steif ausgebildet sein. Dies ermöglicht es, Anschlussleitungen in einfacher Weise durch Anlöten, Anschweißen oder mittels Steckverbindern elektrisch leitend an die elektrisch leitenden Anschlusselemente anbringen zu können. Es ist jedoch auch möglich, dass die elektrisch leitenden Anschlusselemente jeweils als flexibler Leitungsdraht oder als Kabel ausgebildet sind.

Bei einer besonders geordnet und zuverlässig zusammenbaubaren Ausführung sind die Stromschienen als Sandwichpaket mit isolierenden Zwischenschichten zwischen den Stromschienen ausgebildet. Die Stapelrichtung des Sandwichpakets kann insbesondere radial (radial ineinander liegende und voneinander isolierte Stromschienen) oder axial (axial aufeinanderliegende und voneinander isolierte Stromschienen) ausgerichtet sein.

Die Stromschienen können vorteilhaft ringförmig oder ringsegmentförmig ausgebildet sein. Eine solche Ausführung ermöglicht es insbesondere, die Anschlussbaugruppe samt deren Stromschienen axial angrenzend an den Statorkern anordnen zu können, wobei in der Mitte ein Freiraum für den Rotor oder eine Abtriebswelle (bei einem Einbau auf der Seite, auf der der Rotor oder eine mit dem Rotor drehfest verbundene Abtriebswelle hervorsteht) oder für zusätzliche Elemente, wie beispielsweise einen Sensor, insbesondere einen Rotorlagesensor, (insbesondere bei einem Einbau auf der der Abtriebswelle gegenüberliegenden Seite) zur Verfügung steht. Insbesondere kann die Einhausung entsprechend ringförmig oder ringsegmentförmig ausgebildet sein.

Der Statorkern kann mehrere erste Wickelzähne aufweisen, auf die ausschließlich die ersten Statorspulen gewickelt sind, und er kann außerdem mehrere zweite Wickelzähne aufweisen, auf die ausschließlich die zweiten Statorspulen gewickelt sind. Es hat sich gezeigt, dass bei einer solchen Ausführung keine zusätzlichen Mittel zur Trennung des magnetischen Flusses zwischen einzelnen Wickelzähnen erforderlich (aber möglich) sind. Insbesondere sind auch dann keine zusätzlichen Mittel zur Trennung des magnetischen Flusses erforderlich, wenn erste Wickelzähne, die dem ersten Elektromotor zugeordnet sind, und zweite Wickelzähne, die dem zweiten Elektromotor zugeordnet sind, einander benachbart angeordnet sind. Vielmehr hat es sich gezeigt, dass sogar beide (oder mehr) Elektromotore des erfindungsgemäßen Elektromotorsystems, die denselben Rotor aufweisen, bei sehr hoher mechanischer Leistungsabgabe gleichzeitig betreibbar sind, weitgehend ohne dass sich die Elektromotore gegenseitig nachteilig beeinflussen. Allerdings ist es auch möglich, beispielsweise nur den ersten der Elektromotore zu verwenden. In diesem Fall steht der zweite Elektromotor (oder ggf. auch ein dritter) Elektromotor als Ersatzmotor für den Fall zur Verfügung, dass der erste Elektromotor ausfällt. Alternativ oder zusätzlich kann auch vorgesehen sein, dass beispielsweise nach einer Anlaufphase, in der beide Elektromotore gleichzeitig betrieben werden, einer der Elektromotore abgeschaltet wird, um Energie einzusparen.

Der erste Elektromotor und der zweite Elektromotor weisen denselben, vorzugsweise einzigen, Rotor auf, der relativ zu dem Stator rotierbar angeordnet ist. Insbesondere kann der Rotor rotierbar in dem Statorkern angeordnet sein. Es ist alternativ allerdings auch möglich, dass die Elektromotore als Außenläufer ausgebildet sind und der Rotor den Stator umgibt.

Der Rotor kann mehrere, vorzugsweise in Umfangsrichtung symmetrisch, angeordnete Permanentmagnete aufweisen.

Bei einer ganz besonders einfach und kompakt herstellbaren Ausführung weist der Statorkern einen Stapel von, vorzugsweise lamellierten und isolierten, Elektroblechen auf, von denen jedes erste Abschnitte, die Bestandteil der ersten Wickelzähne sind, und zweite Abschnitte, die Bestandteil der zweiten Wickelzähne sind, aufweist. Falls das Elektromotorsystem noch weitere Elektromotore aufweist, können in analoger Weise dritte, vierte, usw. Abschnitte, die Bestandteil der dritten, vierten usw. Wickelzähne sind, vorhanden sein.

In besonders vorteilhafter Weise kann der Stator derart ausgebildet sein, dass jedes der Elektrobleche einen Anteil zu jedem der Wickelzähne beiträgt. Insbesondere kann vorteilhaft vorgesehen sein, dass der Statorkern aus einem Stapel von, vorzugsweise gleichen, einstückig hergestellten und gegeneinander elektrisch isolierten und/oder miteinander verklebten Elektroblechen besteht. Die Elektrobleche können in herkömmlicher Weise, insbesondere durch Ausstanzen, (und ggf. weitere Bearbeitungsschritte, wie das Auftragen eines Isoliermittels) hergestellt sein.

Bei einer ganz besonders einfach und kompakt herstellbaren Ausführung weist jedes der Elektrobleche einen ringförmigen Abschnitt auf, an dessen Umfang, insbesondere an dessen Innenumfang, die ersten und zweiten Abschnitte umlaufend abwechselnd angeordnet sind.

Bei einer besonderen Ausführung ist der Statorkern nicht aus segmentartigen Wickelzähnen oder aus segmentartigen Wickelzahngruppen zusammengesetzt. Insbesondere kann der Statorkern als ein einstückiger Stapel von, insbesondere gleichen, Elektroblechen, die voneinander elektrisch isoliert sind, hergestellt sein, der nicht in einzelne Segmente von Wickelzähnen oder Gruppen von Wickelzähnen zerlegbar ist, ohne die Elektrobleche zu zerstören.

Allerdings ist es alternativ vorteilhaft auch möglich, dass der Statorkern aus mehreren Wickelzahnsegmenten oder aus segmentartigen Wickelzahngruppen zusammengesetzt ist.

Es hat sich gezeigt, dass eine besonders kompakte Bauweise ermöglicht ist, wenn der Statorkern auf besondere Art aus mehreren besonderen Statorkernsegmenten zusammengesetzt wird. Das Zusammensetzen aus mehreren Statorkernsegmenten, von denen jedes mehrere Wickelzähne aufweist, hat den ganz besonderen Vorteil, dass ein elektrisches und/oder magnetisches Übersprechen von den Statorspulen, die auf die Wickelzähne eines Statorkernsegment gewickelt sind, auf die Statorspulen, die auf die Wickelzähne eines anderen Statorkernsegments gewickelt sind, einfach, wirkungsvoll und bauraumsparend unterbunden oder zumindest wesentlich reduziert werden kann.

Darüber hinaus ermöglicht die Erfindung ein räumliches Verschachteln der Statorkernsegmente ineinander, was, insbesondere in Axialrichtung, eine besonders bauraumsparende Bauweise ermöglicht. Insbesondere im Hinblick auf eine einfache und schnelle Zusammensetzbarkeit der Statorkernsegmente kann wenigstens eines der Statorkernsegmente als ein zusammenhängendes Stück ausgebildet sein, das als Ganzes gehandhabt werden kann. Vorzugsweise sind sämtliche Statorkernsegmente als zusammenhängende Stücke ausgebildet, die jeweils einzeln und als Ganzes gehandhabt werden können.

Es ist beispielsweise möglich, die Statorkernsegmente jeweils aus einem einzigen Stück Rohmaterial herzustellen. Es ist auch möglich, die Statorkernsegmente jeweils mittels eines Spritzguss-, Gieß-, Press- oder Sinterverfahrens in einem Stück herzustellen. Es ist alternativ auch möglich, die Statorkernsegmente jeweils aus mehreren Bauteilen, beispielsweise aus mehreren Elektroblechstücken, zu jeweils einem Stück zusammenzubauen, das als Ganzes gehandhabt werden kann.

Der Statorkern kann beispielsweise aus genau zwei Statorkernsegmenten zusammengesetzt sein. Beispielsweise ist es möglich den Statorkern aus genau zwei, insbesondere gleichen, Statorkernsegmenten zusammenzusetzen, von denen jedes zwei oder mehr Wickelzähne aufweist. Bei einer ganz besonders vorteilhaften Ausführung ist der Statorkern aus genau zwei, insbesondere gleichen, Statorkernsegmenten zusammenzusetzen, von denen jedes sechs Wickelzähne aufweist. Der Statorkern dieser Ausführung weist im Ergebnis 12 Wickelzähne auf. Es ist jedoch auch möglich, den Statorkern aus einer größeren Anzahl von Statorkernsegmenten zusammenzusetzen.

Die Statorkernsegmente können vorteilhaft insbesondere derart ausgebildet sein, dass die Wickelzähne unterschiedlicher Statorkernsegmente in Umfangsrichtung abwechselnd oder, insbesondere wenn mehr als zwei Statorkernsegmente vorhanden sind, mit einer regelmäßigen Reihenfolge, insbesondere einer zyklisch wiederkehrenden Reihenfolge, angeordnet sind. Auf diese Weise ist insbesondere eine rotationssymmetrische Bauweise des Statorkerns möglich.

Bei einer besonderen Ausführung sind die Wickelzähne jedes Statorkernsegments im Umfangsrichtung gleichmäßig verteilt angeordnet. Eine solche Ausführung ermöglicht eine rotationssymmetrische Bauweise des Statorkerns. Insbesondere können die Wickelzähne der Statorkernsegmente derart verteilt angeordnet sein, dass nach dem Zusammensetzen der Statorkernsegmente jeweils zwischen zwei Wickelzähnen eines Statorkernsegments wenigstens ein Wickelzahn wenigstens eines anderen Statorkernsegments angeordnet ist.

Alternativ oder zusätzlich kann vorteilhaft vorgesehen sein, dass die Statorkernsegmente bezogen auf die Rotationsachse drehversetzt zueinander angeordnet sind. Eine solche Ausführung ermöglicht es insbesondere, die Statorkernsegmente wenigstens teilweise axial ineinander zu verschachteln. Insbesondere ist auf diese Weise vorteilhaft erreicht, die Wickelzähne eines Statorkernsegments nicht axial von den Wickelzähnen eines anderen Statorkernsegments beabstandet anordnen zu müssen.

Insbesondere im Hinblick auf eine symmetrische, insbesondere rotationssymmetrische, Bauweise des Statorkerns können die Statorkernsegmente des Statorkerns vorteilhaft eine gleiche Anzahl von Wickelzähnen aufweisen.

Bei einer ganz besonders vorteilhaften Ausführung sind wenigstens zwei der Statorkernsegmente gleich ausgebildet. Insbesondere kann vorteilhaft vorgesehen sein, dass alle Statorkernsegmente des Statorkerns gleich ausgebildet sind. Eine solche Ausführung ist durch die Verwendung von Gleichteilen im Hinblick auf eine kostengünstige Herstellung besonders vorteilhaft. Beispielsweise kann der Statorkern u.a. aus genau zwei gleichen Statorkernsegmenten zusammengefügt sein, die in Axialrichtung einander entgegengesetzt und bezogen auf die Rotationsachse drehversetzt zueinander angeordnet sind. Der Drehwinkel, um die die Statorkernsegmente drehversetzt sind, kann insbesondere 360 dividiert durch die Anzahl aller Wickelzähne des Statorkerns betragen.

Vorzugsweise sind die ersten Wickelzähne und die zweiten Wickelzähne (unabhängig davon ob der Statorkern einstückig oder aus Segmenten hergestellt ist) im Hinblick auf eine kompakte Bauweise axial nicht voneinander beabstandet und auch nicht axial zueinander versetzt angeordnet. Vielmehr ist es bevorzugt, dass die ersten Wickelzähne und die zweiten Wickelzähne axial gleich angeordnet sind. Alternativ oder zusätzlich kann vorteilhaft vorgesehen sein, dass die ersten Wickelzähne und die zweiten Wickelzähne gleich, insbesondere zumindest axial gleich groß, ausgebildet sind.

Vorzugsweise ist jede der ersten Statorspulen jeweils ausschließlich auf einen einzigen ersten Wickelzahn gewickelt. Alternativ oder zusätzlich kann vorteilhaft vorgesehen sein, dass jede der zweiten Statorspulen jeweils ausschließlich auf einen einzigen zweiten Wickelzahn gewickelt ist. Es hat sich gezeigt, dass das erfindungsgemäße Elektromotorsystem besonders gut funktioniert, wenn auf einen Wickelzahn nur eine einzige Statorspule entweder des ersten Elektromotors oder des zweiten Elektromotors (ggf. des dritten, vierten usw. Elektromotors) gewickelt ist. Die Statorspulen können in ganz besonders vorteilhafter Weise mittels eines Nadelwicklers gewickelt sein.

Bei einer ganz besonders effizient arbeitenden Ausführung trägt jeder erste Wickelzahn ausschließlich eine einzige der ersten Statorspulen. Alternativ oder zusätzlich kann vorteilhaft vorgesehen sein, dass jeder zweite Wickelzahn ausschließlich eine einzige der zweiten Statorspulen trägt. Diese Bauweise trägt erheblich dazu bei, dass die Elektromotore, insbesondere gleichzeitig, betreibbar sind, ohne sich gegenseitig zu stören.

Die ersten und zweiten (und ggf. dritten , vierten, usw.) Statorspulen können gleich ausgebildet sein. Insbesondere können auf diese Weise der erste Elektromotor und der zweite Elektromotor gleich ausgebildet werden. Eine solche Ausführung hat insbesondere den ganz besonderen Vorteil, dass in einfacher Weise der zweite Elektromotor (oder ggf. auch ein dritter, vierte ...) Elektromotor als Ersatzmotor unter denselben Betriebs- und Ansteuerbedingungen in dem Fall verwendet werden kann, dass der erste Elektromotor ausfällt.

Insbesondere ein solches Elektromotorsystem ermöglicht es beispielsweise auch, ein anzutreibendes System aus dem Stillstand unter gleichzeitiger Verwendung des ersten und des zweiten (und ggf. dritten ...) Elektromotors anzufahren, wobei nach dem Anfahren (wenigstens) einer der Elektromotore abgeschaltet wird, um das System dann effizient nur mit einem der Elektromotore (bzw. mit einer geringeren Anzahl von Elektromotoren) weiter zu betreiben. Allerdings ist dies auch möglich, wenn sich die ersten Statorspulen von den zweiten Statorspulen hinsichtlich wenigstens einer Eigenschaft voneinander unterscheiden.

Bei einer ganz besonders vielseitig einsetzbaren Ausführung unterscheiden sich die ersten Statorspulen von den zweiten Statorspulen hinsichtlich wenigstens einer Eigenschaft. Beispielsweise können sich die ersten Statorspulen von den zweiten Statorspulen hinsichtlich wenigstens einer der folgenden Eigenschaften voneinander unterscheiden: Windungszahl, Wickeldrahtdurchmesser, Wickeldrahtquerschnitt, Wickeldrahtmaterial, Wickelart. Auf diese Weise kann vorteilhaft erreicht werden, dass der erste Elektromotor andere Eigenschaften, beispielsweise hinsichtlich des maximalen Drehmoments und/oder maximalen Drehzahl und/oder des Anlaufverhaltens aufweist, als der zweite (und/oder dritte, vierte ...) Elektromotor.

Ein solches Elektromotorsystem ermöglicht es beispielsweise, ein anzutreibendes System aus dem Stillstand mit dem ersten Elektromotor, der zum Bereitstellen eines besonders hohen Drehmoments ausgelegt ist, anzufahren, während der zweite Elektromotor abgeschaltet ist, um anschließend den ersten Elektromotor abzuschalten und das angefahrene System mit dem zweiten Elektromotor, der zum Bereitstellen einer hohen Dauerdrehzahl ausgelegt ist, weiter zu betreiben. Das Umschalten von dem ersten Elektromotor auf den zweiten Elektromotor kann beispielsweise erfolgen, wenn wenigstens eine Kenngröße, beispielsweise eine Drehzahl oder ein Drehmoment, des Elektromotorsystems oder des von dem Elektromotorsystem angetriebenen System einen zuvor festgelegten Wert erreicht. Insbesondere kann wenigstens ein Sensor zum Messen der Kenngröße vorhanden sein.

Beispielsweise kann ein geparktes Fahrzeug, das zum Erreichen eines Vortriebs mit wenigstens einem solchen erfindungsgemäßen Elektromotorsystem ausgerüstet ist, mittels eines ersten Elektromotors des Elektromotorsystems, der zum Bereitstellen eines besonders hohen Drehmoments ausgelegt ist, effektiv aus dem Stand in Bewegung versetzt werden, wobei ein Umschalten auf den zweiten Elektromotor, der zum Bereitstellen einer hohen Dauerdrehzahl ausgelegt ist, erfolgt, sobald eine vorbestimmte Kenngröße, beispielsweise eine vorbestimmte oder einstellbare Fahrzeuggeschwindigkeit und/oder eine bestimmte Drehzahl, erreicht wird.

Bei einer ganz besonders vielseitig einsetzbaren Ausführung ist der erste Elektromotor für eine erste Betriebsspannung ausgelegt, während der zweite Elektromotor für eine zweite Betriebsspannung ausgelegt ist, die von der ersten Betriebsspannung verschieden ist. Beispielsweise kann der erste Elektromotor für eine erste Betriebsspannung von 12 Volt ausgelegt sein, während der zweite Elektromotor für eine zweite Betriebsspannung von 48 Volt ausgelegt ist.

Bei einer ganz besonders vorteilhaften Ausführung, die insbesondere im Bereich der Elektrofahrzeuge verwendet werden kann, ist der erste Elektromotor für eine erste Betriebsspannung ausgelegt, die über 350 Volt, insbesondere 400 Volt oder 800 Volt, beträgt. Der zweite Elektromotor ist für eine zweite Betriebsspannung ausgelegt, die ebenfalls über 350 Volt, insbesondere 400 Volt oder 800 Volt, beträgt. Insbesondere kann die zweite Betriebsspannung genauso hoch sein, wie die erste Betriebsspannung oder sich von der ersten Betriebsspannung unterscheiden. Gleiches gilt analog auch für die Betriebsstromstärken. Bei einer besonderen Ausführung sind die ersten Statorspulen dazu ausgebildet, jeweils bei einer ersten Betriebsspannung und bei einer ersten Betriebsstromstärke betrieben zu werden. Analog sind die zweiten Statorspulen dazu ausgebildet, jeweils bei einer zweiten Betriebsspannung und bei einer zweiten Betriebsstromstärke betrieben zu werden.

Es ist auch möglich, dass der erste Elektromotor für eine erste Betriebsspannung ausgelegt, die über 350 Volt, insbesondere 400 Volt oder 800 Volt, beträgt, während der zweite Elektromotor ist für eine zweite Betriebsspannung ausgelegt ist, die unter 100 Volt, insbesondere 48 Volt oder 12 Volt oder ein Vielfaches von 12 Volt, beträgt.

Die Betriebsspannung kann insbesondere eine Gleichspannung sein. Bei einer besonderen Ausführung ist die Betriebsspannung eine Zwischenkreisspannung, die in einem Zwischenkreis anliegt, wobei dem Zwischenkreis ein Ausgangsstromrichter, insbesondere ein Frequenzumrichter, nachgeschaltet ist, an den die Statorspulen angeschlossen sind. Dem Zwischenkreis kann ein Eingangsstromrichter vorgeschaltet sein, der die Zwischenkreisspannung (beispielsweise durch Gleichrichten einer Wechselspannung) insbesondere einer netzgebundenen Wechselspannung, bereitstellt. Alternativ kann die Zwischenkreisspannung von einem elektrischen Energiespeicher, insbesondere einer Batterie oder einer wiederaufladbaren Batterie, bereitgestellt sein.

Bei einer vorteilhaften Ausführung sind die ersten Statorspulen in eine erste elektrische Schaltung integriert, während die zweiten Statorspulen in eine von der ersten elektrischen Schaltung separate und/oder unabhängige zweite elektrische Schaltung integriert sind. Die erste elektrische Schaltung kann beispielsweise eine Sternschaltung oder eine Dreiecksschaltung sein. Alternativ oder zusätzlich kann vorteilhaft vorgesehen sein, dass die zweite elektrische Schaltung eine Sternschaltung oder eine Dreiecksschaltung ist. Insbesondere ist es nicht zwingend erforderlich aber vorteilhaft möglich, dass die elektrischen Schaltungen unterschiedlicher Elektromotore von demselben Schaltungstypus sind. Im Falle von Sternschaltungen können die erste Schaltung und die zweite Schaltung vorteilhaft einen gemeinsamen Sternpunkt aufweisen. Allerdings sind auch getrennte Sternpunkte möglich.

Vorzugsweise sind die erste elektrischen Schaltung und die zweite elektrische Schaltung derart ausgebildet, dass sie unabhängig voneinander betrieben werden können. Dies hat den ganz besonderen Vorteil, dass ein Ausfall eines der Elektromotore und/oder ein Ausfall der dem Elektromotor zugeordneten elektrischen Schaltung keinen Einfluss auf die Funktionsfähigkeit des (bzw. der) übrigen Elektromotore haben. Allerdings kann insbesondere für einen Simultanbetrieb des ersten und des zweiten Elektromotors vorgesehen sein, dass (beispielsweise durch eine Kopplung der ersten und zweiten Schaltung) die Ansteuerung des ersten Elektromotors synchron oder zeitversetzt synchron zur Ansteuerung des zweiten Elektromotors erfolgt. Insbesondere kann vorteilhaft vorgesehen sein, dass die Ansteuersignale zumindest hinsichtlich der Frequenz und der Phasenlagen für beide (und ggf. weitere) Elektromotore (abgesehen von einem Zeitversatz) gleich sind. Auf diese Weise ist ganz besonders gut gewährleistet, dass sich die Elektromotore bei einem gleichzeitigen Betrieb oder beim Umschalten von einem Elektromotor auf den anderen Elektromotor bei einem sequentiellen Betrieb nicht gegenseitig nachteilig beeinflussen.

Vorzugsweise ist der Rotor durch ausschließliches Bestromen der ersten Statorspulen zur Rotation antreibbar. Vorzugsweise ist der Rotor außerdem durch ausschließliches Bestromen der zweiten Statorspulen zur Rotation antreibbar.

Alternativ oder zusätzlich kann vorteilhaft vorgesehen sein, dass der Rotor durch gleichzeitiges Bestromen der ersten Statorspulen und der zweiten Statorspulen zur Rotation antreibbar ist. Ein simultanes Bestromen der ersten Statorspulen und der zweiten Statorspulen, insbesondere aller Statorspulen (falls dritte, vierte ... Statorspulen vorhanden sind), hat den Vorteil, dass das Elektromotorsystem eine höhere Ausgangsleistung aufweist. Insbesondere kann ein Antriebssystem, das ein solches Elektromotorsystem beinhaltet, vorteilhaft eine Steuerungsvorrichtung aufweisen, die dazu ausgebildet ist, gleichzeitig sowohl die ersten Statorspulen als auch die zweiten Statorspulen (und vorzugsweise alle weiteren Statorspulen, falls dritte, vierte ... Statorspulen vorhanden sind) zu bestromen, um den Rotor zur Rotation anzutreiben.

Der erste Elektromotor kann vorteilhaft als bürstenloser Gleichstrommotor oder als permanent erregter Synchronmotor ausgebildet sein. Auch der zweite Elektromotor kann vorteilhaft als bürstenloser Gleichstrommotor oder als permanent erregter Synchronmotor ausgebildet sein.

Bei einer besonderen Ausführung sind der erste Elektromotor und der zweite Elektromotor als Mehrphasenmotor, insbesondere als Dreiphasenmotor, ausgebildet. Hierbei kann zur Erzielung einer hohen Effizienz im gemeinsamen Betrieb vorteilhaft vorgesehen sein, dass jede der ersten Statorspulen einer der Phasen zugordnet ist und dass jeder der zweiten Statorspulen einer der Phasen zugordnet ist, wobei die Zuordnung der Phasen der ersten Statorspulen zu der Zuordnung der Phasen der zweiten Statorspulen drehversetzt ist.

Ganz besonders vorteilhaft ist ein Antriebssystem, das ein erfindungsgemäßes Elektromotorsystem und eine elektronische Steuerungsvorrichtung aufweist. Insbesondere kann die Steuerungsvorrichtung eine erste Antriebselektronik, die die Bestromung der ersten Statorspulen steuert, und/oder eine zweite Antriebselektronik, die die Bestromung der zweiten Statorspulen steuert, aufweisen. Die Steuerungsvorrichtung kann mehrere, insbesondere redundante, Antriebselektroniken beinhalten, von denen jede dazu ausgebildet ist, die ersten und zweiten (und dritten, vierten ...) Statorspulen zu bestromen. Die Steuerungsvorrichtung kann insbesondere dazu ausgebildet sein, wenigstens eine Betriebsgröße des ersten und/oder zweiten (oder dritten, vierten ...) Elektromotors, insbesondere die Drehzahl und/oder das Drehmoment und/oder eine elektrische Stromstärke und/oder eine elektrische Betriebsspannung und/oder eine Frequenz, zu steuern oder zu regeln.

Insbesondere für ein simultanes Bestromen der ersten Statorspulen und der zweiten Statorspulen (insbesondere aller Statorspulen) kann vorteilhaft vorgesehen sein, dass die Antriebselektroniken miteinander synchronisierbar sind. Hierzu kann die Antriebselektronik eine Synchronisierungsschaltung beinhalten. Auch bei einer solchen Ausführung kann jedoch vorteilhaft vorgesehen sein, dass das Elektromotorsystem unter Verwendung nur eines Elektromotors weiter betrieben werden kann, wenn bei dem anderen Elektromotor und/oder dessen Antriebselektronik ein Fehler auftritt.

Insbesondere kann vorteilhaft vorgesehen sein, dass die Steuerungsvorrichtung den jeweiligen Elektromotor (oder alle Elektromotore des Elektromotorsystems) mittels Pulsbreitenmodulation steuert oder regelt. Eine solche Ausführung erlaubt eine präzise Steuerung bzw. Regelung der Drehzahl und/oder des Drehmomentes. Bei einer Steuerung bzw. Regelung eines Elektromotors mittels Pulsbreitenmodulation sind insbesondere das Tastverhältnis und die Trägerfrequenz von besonderer Relevanz. Insbesondere kann vorteilhaft vorgesehen sein, dass die Steuerungsvorrichtung den jeweiligen Elektromotor mittels Pulsbreitenmodulation mit einer Trägerfrequenz im Bereich von 4 kHz bis 150 kHz, insbesondere im Bereich von 20 kHz bis 100 kHz oder 20 kHz bis 70 kHz, steuert oder regelt. Diese Trägerfrequenzen haben insbesondere den ganz besonderen Vorteil, dass ein hoher Wirkungsgrad und/oder hohe Drehzahlen realisiert werden können. Darüber hinaus besteht ein besonderer Vorteil dieser vergleichsweise hohen Trägerfrequenzen darin, dass kompakte Abmessungen möglich sind, ohne dass es bei hohen Stromstärken zu einer übermäßigen Erwärmung kommt. In ganz besonders vorteilhafter Weise sind durch die genannten Trägerfrequenzen außerdem laute Motorengeräusche vermieden oder zumindest in einen für einen Menschen nicht hörbaren Frequenzbereich verschoben.

Das erfindungsgemäße Elektromotorsystem und das erfindungsgemäße Antriebssystem können ganz besonders vorteilhaft in Systemen zur Anwendung kommen, in denen ein vielseitiger und zuverlässiger Antrieb einer Komponente erforderlich ist. Insbesondere ist eine Verwendung in sicherheitsrelevanten Systemen, insbesondere bei sicherheitsrelevanten Fahrzeugsystemen, wie beispielsweise bei Lenkungen, aktiven Fahrwerken oder Robotern, besonders vorteilhaft.

Insoweit ist eine Lenkung, insbesondere eine PKW-Lenkung oder eine LKW-Lenkung, besonders vorteilhaft, die wenigstens ein erfindungsgemäßes Elektromotorsystem oder ein erfindungsgemäßes Antriebssystem aufweist. Bei der Lenkung kann es sich beispielsweise um eine Servolenkung und/oder eine Überlagerungslenkung und/oder eine Steer-by-Wire-Lenkung handeln. Die Verwendung eines erfindungsgemäßen Elektromotorsystems oder eines erfindungsgemäßen Antriebssystems in einer Lenkung ist besonders vorteilhaft, weil bei einem Fahrzeug ein sehr hohes Sicherheitsniveau erforderlich ist, um ein plötzliches Totalversagen der Lenkung ausschließen zu können. Außerdem kann für unterschiedliche Fahrsituationen angepasst ein Betrieb mit dem ersten Elektromotor oder ein Betrieb mit dem zweiten Elektromotor oder mit beiden Elektromotoren ausgewählt werden. Hierbei ist es im Hinblick auf eine große Flexibilität besonders Vorteilhaft, wenn der erste Elektromotor und der zweite Elektromotor unterschiedlich ausgebildet sind.

Ganz besonders vorteilhaft ist auch ein Fahrwerk, das wenigstens ein erfindungsgemäßes Elektromotorsystem oder ein erfindungsgemäßes Antriebssystem aufweist. Bei dem Fahrwerk kann es sich insbesondere um ein aktives Fahrwerk für ein Kraftfahrzeug handeln. Das aktive Fahrwerk kann insbesondere zur Nickstabilisation und/oder zur Wankstabilisation und/oder zur Höhenverstellung einer Fahrzeugkarosserie relativ zu den Rädern ausgebildet sein. Die Verwendung eines erfindungsgemäßen Elektromotorsystems oder eines erfindungsgemäßen Antriebssystems in einem aktiven Fahrwerk ist besonders vorteilhaft, weil bei einem Fahrzeug ein sehr hohes Sicherheitsniveau erforderlich ist, um ein plötzliches und gefährliches Totalversagen während der Fahrt ausschließen zu können. Außerdem kann für unterschiedliche Fahrsituationen angepasst ein Betrieb mit dem ersten Elektromotor oder ein Betrieb mit dem zweiten Elektromotor oder mit beiden Elektromotoren ausgewählt werden. Hierbei ist es im Hinblick auf eine große Flexibilität besonders Vorteilhaft, wenn der erste Elektromotor und der zweite Elektromotor unterschiedlich ausgebildet sind.

Ganz besonders vorteilhaft ist auch ein Roboter, insbesondere Industrieroboter, der wenigstens ein erfindungsgemäßes Elektromotorsystem oder ein erfindungsgemäßes Antriebssystem beinhaltet. Insbesondere können das erfindungsgemäße Elektromotorsystem oder das erfindungsgemäße Antriebssystem vorteilhaft Bestandteil eines Robotergelenks sein. Das Robotergelenk kann insbesondere in der Weise ausgebildet sein, dass es zwei Träger eines Roboterarms beweglich, insbesondere drehbeweglich oder schwenkbeweglich, miteinander verbindet, wobei eine Bewegung der Träger relativ zueinander mittels des erfindungsgemäßen Elektromotorsystems oder des erfindungsgemäßen Antriebssystems gesteuert oder geregelt werden kann. Die Verwendung eines erfindungsgemäßen Elektromotorsystems oder eines erfindungsgemäßen Antriebssystems in einem Roboter bzw. Robotergelenk ist besonders vorteilhaft, weil bei einem Roboter ein sehr hohes Sicherheitsniveau erforderlich ist, um ein plötzliches und gefährliches Totalversagen, insbesondere während der Ausführung einer Bewegung, zuverlässig ausschließen zu können. Außerdem kann an unterschiedliche Anwendungssituationen des Roboters angepasst wahlweise ein Betrieb mit dem ersten Elektromotor oder ein Betrieb mit dem zweiten Elektromotor oder mit beiden Elektromotoren ausgewählt werden. Hierbei ist es im Hinblick auf eine große Flexibilität besonders vorteilhaft, wenn der erste Elektromotor und der zweite Elektromotor unterschiedlich ausgebildet sind.

Ganz besonders vorteilhaft ist auch ein Flugzeug, insbesondere ein Fly-by-Wire-Flugzeug, das wenigstens ein erfindungsgemäßes Elektromotorsystem oder ein erfindungsgemäßes Antriebssystem beinhaltet. Das erfindungsgemäße Elektromotorsystem oder das erfindungsgemäße Antriebssystem können insbesondere zur Steuerung oder Regelung der Stellung eines Ruders oder einer Klappe zum Einsatz kommen. Die Verwendung eines erfindungsgemäßen Elektromotors oder eines erfindungsgemäßen Antriebssystems in einem Flugzeug ist besonders vorteilhaft, weil bei einem Flugzeug ein sehr hohes Sicherheitsniveau erforderlich ist, um ein plötzliches und gefährliches Totalversagen, insbesondere während des Fluges, zuverlässig ausschließen zu können. Außerdem kann an unterschiedliche Flugsituationen angepasst entweder ein Betrieb mit dem ersten Elektromotor oder ein Betrieb mit dem zweiten Elektromotor oder ein Betrieb mit beiden Elektromotoren ausgewählt werden. Hierbei ist es im Hinblick auf eine große Flexibilität besonders Vorteilhaft, wenn der erste Elektromotor und der zweite Elektromotor unterschiedlich ausgebildet sind.

Ganz besonders vorteilhaft ist auch ein Fahrzeug, insbesondere Baumaschinenfahrzeug, das wenigstens ein erfindungsgemäßes Elektromotorsystem oder ein erfindungsgemäßes Antriebssystem aufweist. Die Verwendung eines erfindungsgemäßen Elektromotorsystems oder eines erfindungsgemäßen Antriebssystems in einem Fahrzeug ist besonders vorteilhaft, weil bei einem Fahrzeug ein sehr hohes Sicherheitsniveau erforderlich ist, um ein plötzliches und gefährliches Totalversagen während der Fahrt ausschließen zu können. Außerdem kann für unterschiedliche Fahrsituationen angepasst ein Betrieb mit dem ersten Elektromotor oder ein Betrieb mit dem zweiten Elektromotor oder ein Betrieb mit beiden Elektromotoren ausgewählt werden. Hierbei ist es im Hinblick auf eine große Flexibilität besonders Vorteilhaft, wenn der erste Elektromotor und der zweite Elektromotor unterschiedlich ausgebildet sind. Das Fahrzeug kann vorteilhaft mehrere erfindungsgemäße Elektromotorsysteme aufweisen, wobei die Elektromotorsysteme unterschiedliche Antriebsräder und/oder unterschiedliche Antriebsachsen des Fahrzeuges antreiben.

Ganz besonders vorteilhaft ist auch eine Baumaschine, die wenigstens ein erfindungsgemäßes Elektromotorsystem oder ein erfindungsgemäßes Antriebssystem aufweist. Die Verwendung eines erfindungsgemäßen Elektromotorsystems oder eines erfindungsgemäßen Antriebssystems in einer Baumaschine ist besonders vorteilhaft, weil bei Baumaschinen ein sehr hohes Sicherheitsniveau erforderlich ist, um ein plötzliches und gefährliches Totalversagen während des Betriebs ausschließen zu können. Außerdem kann für unterschiedliche Anwendungssituationen angepasst ein Betrieb mit entweder dem ersten Elektromotor oder ein Betrieb mit dem zweiten Elektromotor oder ein Betrieb mit beiden Elektromotoren ausgewählt werden. Hierbei ist es im Hinblick auf eine große Flexibilität besonders Vorteilhaft, wenn der erste Elektromotor und der zweite Elektromotor unterschiedlich ausgebildet sind.

Das erfindungsgemäße Elektromotorsystem kann vorteilhaft in einem Umkehrbetrieb, bei dem der Rotor von außen relativ zu dem Stator zur Rotation angetrieben wird, als Generatorsystem verwendet werden. Auch hierbei bietet das erfindungsgemäße Elektromotorsystem den Vorteil einer Redundanz und/oder der individuellen Ausnutzbarkeit von unterschiedlichen Eigenschaften des ersten und zweiten Elektromotors und/oder der gleichzeitigen Einsetzbarkeit des ersten und des zweiten Elektromotors.

Von besonderem Vorteil ist ein Gegenstand, insbesondere ein Elektromotorsystem oder ein Antriebssystem, bzw. ein Verfahren, der bzw. das wenigstens einen der nachfolgenden Aspekte aufweist:
1. Elektromotorsystem (1) beinhaltend wenigstens einen ersten und einen zweiten Elektromotor, wobei der erste Elektromotor erste Statorspulen (2) aufweist und der zweite Elektromotor zweite Statorspulen (3) aufweist und wobei der erste Elektromotor und der zweite Elektromotor denselben Statorkern (5) haben, der die ersten und zweiten Statorspulen (2, 3) trägt, dadurch gekennzeichnet, dass eine einstückige Anschlussbaugruppe (6) mehrere voneinander elektrisch isolierte Stromschienen (7, 8) aufweist, wobei an jede der Stromschienen (7, 8) wenigstens zwei der ersten Statorspulen (2) oder wenigstens zwei der zweiten Statorspulen (3) elektrisch leitend angeschlossen sind.
2. Elektromotorsystem (1) nach Aspekt 1, dadurch gekennzeichnet, dass unter den Stromschienen (7, 8) mehrere erste Stromschienen (7) vorhanden sind, wobei an jede der ersten Stromschienen (7) wenigstens zwei der ersten Statorspulen (2) elektrisch leitend angeschlossen sind, und dass unter den Stromschienen (7, 8) mehrere zweite Stromschienen (8) vorhanden sind, wobei an jede der zweiten Stromschienen (8) wenigstens zwei der zweiten Statorspulen (2) elektrisch leitend angeschlossen sind.
3. Elektromotorsystem (1) nach Aspekt 1, dadurch gekennzeichnet, dass unter den Stromschienen (7, 8) ausschließlich mehrere erste Stromschienen (7) vorhanden sind, wobei an jede der ersten Stromschienen (7) wenigstens zwei der ersten Statorspulen (2) elektrisch leitend angeschlossen sind, und dass eine weitere einstückige Anschlussbaugruppe (16) ausschließlich mehrere zweite Stromschienen (8) aufweist, wobei an jede der zweiten Stromschienen (8) wenigstens zwei der zweiten Statorspulen (3) elektrisch leitend angeschlossen sind.
4. Elektromotorsystem (1) nach einem der Aspekte 1 bis 3, dadurch gekennzeichnet, dass die einstückige Baugruppe (6) eine aus einem elektrisch isolierenden Material hergestellte Einhausung (9) aufweist, die die Stromschienen (7, 8) einhaust.
5. Elektromotorsystem (1) nach Aspekt 4, dadurch gekennzeichnet, dass die Einhausung (9) mehrere voneinander beabstandete Öffnungen (10) aufweist, durch die jeweils elektrisch leitende Anschlusselemente (11, 12) verlaufen, von denen jedes elektrisch leitend mit einer der Stromschienen (7, 8) verbunden ist.
6. Elektromotorsystem (1) nach einem der Aspekte 3 bis 5, dadurch gekennzeichnet, dass die weitere einstückige Anschlussbaugruppe (16) eine aus einem elektrisch isolierenden Material hergestellte weitere Einhausung (17) aufweist, die die zweiten Stromschienen (8) einhaust.
7. Elektromotorsystem (1) nach Aspekt 46, dadurch gekennzeichnet, dass die weitere Einhausung (17) mehrere voneinander beabstandete Öffnungen (10) aufweist, durch die zweiten elektrisch leitende Anschlusselemente (12) verlaufen, von denen jedes elektrisch leitend mit einer der zweiten Stromschienen (8) verbunden ist.
8. Elektromotorsystem (1) nach einem der Aspekte 1 bis 7, dadurch gekennzeichnet, dass der Statorkern (5) axial zwischen der Einhausung (9) und der weiteren Einhausung (17) angeordnet ist und/oder dass der Statorkern (5) axial zwischen der ersten und zweiten Anschlussbaugruppe (6, 16) angeordnet ist.
9. Elektromotorsystem (1) nach einem der Aspekte 6 bis 8, dadurch gekennzeichnet, dass die Öffnungsfläche jeder Öffnung (10) jeweils genauso groß sind, wie die Querschnittsfläche des durch sie hindurch verlaufenden Anschlusselements (11, 12) in der Öffnungsebene oder dass jede Öffnung (10) höchstens 10 mal, insbesondere höchstens 5 mal, so groß sind, wie die Querschnittsfläche des durch sie hindurch verlaufenden Anschlusselements (11, 12) in der Öffnungsebene.
10. Elektromotorsystem (1) nach einem der Aspekte 6 bis 9, dadurch gekennzeichnet, dass
   a. die Einhausung (9) durch Eingießen der Stromschienen (7, 8) mit dem elektrisch isolierenden Material hergestellt ist, wobei das elektrisch isolierende Material nach dem Eingießen ausgehärtet ist, und/oder dass
   b. die weitere Einhausung (17) durch Eingießen der zweiten Stromschienen (7, 8) mit dem elektrisch isolierenden Material hergestellt ist, wobei das elektrisch isolierende Material nach dem Eingießen ausgehärtet ist.
11. Elektromotorsystem (1) nach einem der Aspekte 6 bis 10, dadurch gekennzeichnet, dass
   a. die Einhausung (9) durch ein an den Stromschienen (7, 8) befestigtes Gehäuse gebildet ist, und/oder dass
   b. die weitere Einhausung (17) durch ein an den zweiten Stromschienen (8) befestigtes Gehäuse gebildet ist.
12. Elektromotorsystem (1) nach einem der Aspekte 1 bis 11, dadurch gekennzeichnet, dass
   a. die Anschlussbaugruppe (6) den Statorkern (5) samt den ersten und zweiten Statorspulen (3), insbesondere in Axialrichtung, abdeckt, und/oder dass
   b. die weitere Anschlussbaugruppe (16) den Statorkern (5) samt den ersten und zweiten Statorspulen (3), insbesondere in Axialrichtung, abdeckt.
13. Elektromotorsystem (1) nach einem der Aspekte 1 bis 12, dadurch gekennzeichnet, dass
   a. die Anschlussbaugruppe (6) axial beabstandet zu dem Statorkern (5) angeordnet ist, und/oder dass
   b. die weitere Anschlussbaugruppe (16) axial beabstandet zu dem Statorkern (5) angeordnet ist.
14. Elektromotorsystem (1) nach einem der Aspekte 1 bis 13, dadurch gekennzeichnet, dass
   a. die Einhausung eine Deckelwandung (13) aufweist, die sich in radialer Richtung erstreckt und/oder die senkrecht zur Axialrichtung (13) angeordnet ist, und/oder dass
   b. die weitere Einhausung eine weitere Deckelwandung (18) aufweist, die sich in radialer Richtung erstreckt und/oder die senkrecht zur Axialrichtung (13) angeordnet ist.
15. Elektromotorsystem (1) nach Aspekt 14, dadurch gekennzeichnet, dass die Deckelwandung (13) und/oder die weitere Deckelwandung (18) die Öffnungen (10) aufweist.
16. Elektromotorsystem (1) nach einem der Aspekte 6 bis 15, dadurch gekennzeichnet, dass durch jede Öffnung (10) nur ein einziges der Anschlusselemente (11, 12) verläuft.
17. Elektromotorsystem (1) nach einem der Aspekte 1 bis 16, dadurch gekennzeichnet, dass
   a. die Einhausung (9) zwischen den Öffnungen (10) angeordnete Abschirmwände (20) aufweist, und/oder dass
   b. die weitere Einhausung (17) zwischen den Öffnungen (10) angeordnete Abschirmwände (20) aufweist.
18. Elektromotorsystem (1) nach Aspekt 17, dadurch gekennzeichnet, dass sich die Abschirmwände (20) in dieselbe Richtung erstrecken, wie die jeweils benachbarten elektrisch leitenden Anschlusselemente (11, 12).
19. Elektromotorsystem (1) nach Aspekt 17 oder 18, dadurch gekennzeichnet, dass
   a. sich die Abschirmwände (20) in axialer und radialer Richtung erstrecken, und/oder dass
   b. die Abschirmwände (20) senkrecht zur Deckelwandung (12) angeordnet sind.
20. Elektromotorsystem (1) nach einem der Aspekte 17 bis 19, dadurch gekennzeichnet, dass die Abschirmwände (20) unmittelbar an der Deckelwandung (13) und/oder der weiteren Deckelwandung (18) angeordnet sind.
21. Elektromotorsystem (1) nach einem der Aspekte 17 bis 20, dadurch gekennzeichnet, dass die Abschirmwände (20) zusammen mit der Deckelwandung (13) und/oder der weiteren Deckelwandung (18) einstückig, beispielsweise als Spritzgußbauteil, hergestellt sind.
22. Elektromotorsystem (1) nach einem der Aspekte 17 bis 21, dadurch gekennzeichnet, dass
   a. die Einhausung (9) wenigstens einen, insbesondere an der Deckelwandung (13), angeordneten Rohrabschnitt (15) aufweist, und/oder dass
   b. die weitere Einhausung (17) wenigstens einen, insbesondere an der weiteren Deckelwandung (18), angeordneten Rohrabschnitt (19) aufweist.
23. Elektromotorsystem (1) nach einem der Aspekte 6 bis 22, dadurch gekennzeichnet, dass sich die Öffnungen (10) sich in radialer Richtung erstrecken.
24. Elektromotorsystem (1) nach einem der Aspekte 6 bis 23, dadurch gekennzeichnet, dass sich die Öffnungen (10) sich in axialer Richtung erstrecken.
25. Elektromotorsystem (1) nach einem der Aspekte 6 bis 24, dadurch gekennzeichnet, dass die elektrisch leitenden Anschlusselemente (11, 12) jeweils als Stift oder als Blechstreifen oder Strangpressprofil ausgebildet sind.
26. Elektromotorsystem (1) nach einem der Aspekte 1 bis 25, dadurch gekennzeichnet, dass die ersten Stromschienen (7) ringförmig oder ringsegmentförmig ausgebildet sind, und/oder dass die zweiten Stromschienen (8) ringförmig oder ringsegmentförmig ausgebildet sind
27. Elektromotorsystem (1) nach einem der Aspekte 1 bis 26, dadurch gekennzeichnet, dass zwischen benachbarten Stromschienen (7, 8) ein Isoliermittel vorhanden ist.
28. Elektromotorsystem (1) nach einem der Aspekte 1 bis 27, dadurch gekennzeichnet, dass die Einhausung (9) ringförmig oder ringsegmentförmig ausgebildet ist und/oder dass die weitere Einhausung (17) ringförmig oderringsegmentförmig ausgebildet ist.
29. Elektromotorsystem (1) nach einem der Aspekte 1 bis 28, dadurch gekennzeichnet, dass der Statorkern (5) mehrere erste Wickelzähne (6) aufweist, auf die ausschließlich die ersten Statorspulen (2) gewickelt sind, und mehrere zweite Wickelzähne (7) aufweist, auf die ausschließlich die zweiten Statorspulen (3) gewickelt sind, aufweist.
30. Elektromotorsystem (1) nach einem der Aspekte 1 bis 29, dadurch gekennzeichnet, dass jede der ersten Statorspulen (2) jeweils ausschließlich auf einen einzigen ersten Wickelzahn (22) gewickelt sind und/oder dass jede der zweiten Statorspulen (3) jeweils ausschließlich auf einen einzigen zweiten Wickelzahn (23) gewickelt sind.
31. Elektromotorsystem (1) nach einem der Aspekte 1 bis 30, dadurch gekennzeichnet, dass jeder erste Wickelzahn (22) ausschließlich eine einzige der ersten Statorspulen (2) trägt und/oder dass jeder zweite Wickelzahn (23) ausschließlich eine einzige der zweiten Statorspulen (3) trägt.
32. Elektromotorsystem (1) nach einem der Aspekte 1 bis 31, dadurch gekennzeichnet, dass der Statorkern (5) einen Stapel von Elektroblechen (24) beinhaltet, von denen jedes zumindest erste Abschnitte, die Bestandteil der ersten Wickelzähne (22) sind, und zweite Abschnitte, die Bestandteil der zweiten Wickelzähne (23) sind, aufweist.
33. Elektromotorsystem (1) nach einem der Aspekte 1 bis 32, dadurch gekennzeichnet, dass der Statorkern (5) als einstückiger Stapel von, insbesondere gleichen, Elektroblechen (24) hergestellt ist, der nicht in einzelne Segmente von Wickelzähnen oder Gruppen von Wickelzähnen zerlegbar ist, ohne die Elektrobleche (24) zu zerstören.
34. Elektromotorsystem (1) nach einem der Aspekte 1 bis 33, dadurch gekennzeichnet, dass der Statorkern (5) aus mehreren Wickelzahnsegmenten oder aus segmentartigen Wickelzahngruppen zusammengesetzt ist.
35. Elektromotorsystem (1) nach einem der Aspekte 1 bis 34, dadurch gekennzeichnet, dass die ersten Statorspulen (2) in eine erste elektrische Schaltung integriert sind und dass die zweiten Statorspulen (3) in eine von der ersten elektrischen Schaltung separate und/oder unabhängige zweite elektrische Schaltung integriert sind.
36. Elektromotorsystem (1) nach Aspekt 35, dadurch gekennzeichnet, dass die erste elektrische Schaltung eine Sternschaltung oder eine Dreiecksschaltung ist und/oder dass die zweite elektrische Schaltung eine Sternschaltung oder eine Dreiecksschaltung ist.
37. Elektromotorsystem (1) nach einem der Aspekte 1 bis 36, dadurch gekennzeichnet, dass der Rotor (4) durch ausschließliches Bestromen der ersten Statorspulen (2) zur Rotation antreibbar ist und/oder dass der Rotor (4) durch ausschließliches Bestromen der zweiten Statorspulen (3) zur Rotation antreibbar ist.
38. Elektromotorsystem (1) nach einem der Aspekte 1 bis 37, dadurch gekennzeichnet, dass der Rotor (4) durch gleichzeitiges Bestromen der ersten Statorspulen (2) und der zweiten Statorspulen (3) zur Rotation antreibbar ist.
39. Elektromotorsystem (1) nach einem der Aspekte 1 bis 38, dadurch gekennzeichnet, dass
   a. der erste Elektromotor als bürstenloser Gleichstrommotor oder als permanent erregter Synchronmotor ausgebildet ist, und/oder dass
   b. der zweite Elektromotor als bürstenloser Gleichstrommotor oder als permanent erregter Synchronmotor ausgebildet ist.
40. Elektromotorsystem (1) nach einem der Aspekte 1 bis 39, dadurch gekennzeichnet, dass der erste Elektromotor als Mehrphasenmotor, insbesondere als Dreiphasenmotor, ausgebildet ist und dass der zweite Elektromotor als Mehrphasenmotor, insbesondere als Dreiphasenmotor, ausgebildet ist.
41. Elektromotorsystem (1) nach Aspekt 40, dadurch gekennzeichnet, dass jeder der ersten Statorspulen (2) einer der Phasen zugordnet ist und dass jeder der zweiten Statorspulen (3) einer der Phasen zugordnet ist, wobei die Zuordnung der Phasen der ersten Statorspulen (2) zu der Zuordnung der Phasen der zweiten Statorspulen (3) drehversetzt ist.
42. Elektromotorsystem (1) nach einem der Aspekte 1 bis 41, dadurch gekennzeichnet, dass der erste Elektromotor und der zweite Elektromotor denselben Rotor (4) aufweisen.
43. Elektromotorsystem (1) nach Aspekt 42, dadurch gekennzeichnet, dass der Rotor (4) in Axialrichtung mindestens genauso lang ist, wie der gesamte Statorkern (5) und/oder die ersten Statorspulen (2) und/oder die zweiten Statorspulen (3) und/oder die ersten Wickelzähne (22) und/oder die zweiten Wickelzähne (23).
44. Elektromotorsystem (1) nach Aspekt 42 oder 43, dadurch gekennzeichnet, dass der Rotor (4) mehrere, insbesondere in Umfangsrichtung symmetrisch und/oder äquidistant angeordnete, Permanentmagnete (21) aufweist.
45. Elektromotorsystem (1) nach Aspekt 44, dadurch gekennzeichnet, dass die ersten Statorspulen (2) im Betrieb des ersten Elektromotors mit sämtlichen Permanentmagneten (21) zusammenwirken und dass die zweiten Statorspulen (3) im Betrieb des zweiten Elektromotors mit sämtlichen Permanentmagneten (21) zusammenwirken.
46. Elektromotorsystem (1) nach einem der Aspekte 1 bis 45, dadurch gekennzeichnet, dass die ersten Statorspulen (2) dazu ausgebildet sind, jeweils bei einer ersten Betriebsspannung und bei einer ersten Betriebsstromstärke betrieben zu werden, und dass die zweiten Statorspulen (3) dazu ausgebildet sind, jeweils bei einer zweiten Betriebsspannung und bei einer zweiten Betriebsstromstärke betrieben zu werden.
47. Elektromotorsystem nach Aspekt 46, dadurch gekennzeichnet, dass die erste Betriebsspannung über 350 Volt, insbesondere 400 Volt oder 800 Volt, beträgt, und/oder dass die zweite Betriebsspannung über 350 Volt, insbesondere 400 Volt oder 800 Volt, beträgt.
48. Elektromotorsystem (1) nach einem der Aspekte 1 bis 47, dadurch gekennzeichnet, dass zwischen zwei ersten Statorspulen (2) jeweils eine zweite Statorspule (3) angeordnet ist.
49. Elektromotorsystem (1) nach Aspekt 48, dadurch gekennzeichnet, dass die Abstände der ersten Statorspulen (2) zu den unmittelbar benachbarten zweiten Statorspulen (3) jeweils verschieden sind.
50. Elektromotorsystem (1) nach einem der Aspekte 1 bis 49, dadurch gekennzeichnet, dass die Gesamtanzahl der ersten Statorspulen (2) von der Gesamtanzahl zweiten Statorspulen (3) verschieden ist.
51. Elektromotorsystem (1) nach einem der Aspekte 1 bis 50, dadurch gekennzeichnet, dass die ersten Wickelzähne (6) zu den zweiten Wickelzähen (7), insbesondere hinsichtlich der Größe, ungleich ausgebildet sind.
52. Antriebssystem das ein Elektromotorsystem (1) nach einem der Aspekte 1 bis 51 und eine elektronische Steuerungsvorrichtung aufweist.
53. Antriebssystem nach Aspekt 52, dadurch gekennzeichnet, dass die Steuerungsvorrichtung (38) eine erste Antriebselektronik (39) aufweist, die die Bestromung der ersten Statorspulen (2) steuert, und/oder dass die Steuerungsvorrichtung (38) eine zweite Antriebselektronik (40) aufweist, die die Bestromung der zweiten Statorspulen (3) steuert.
54. Antriebssystem nach Aspekt 53, dadurch gekennzeichnet, dass die erste Antriebselektronik (39) und die zweite Antriebselektronik (40) miteinander synchronisiert sind oder eine Synchronisierung einschaltbar ist.
55. Antriebssystem nach Aspekt 53 oder 54, dadurch gekennzeichnet, dass
   a. der erste Elektromotor einen ersten Rotationslagesensor aufweist, der Messsignale an die erste Antriebselektronik (9) übermittelt, und dass der zweite Elektromotor einen zweiten Rotationslagesensor aufweist, der Messsignale an die zweite Antriebselektronik (10) übermittelt, oder dass
   b. erste Elektromotor und der zweite Elektromotor einen gemeinsamen Rotationslagesensor aufweisen, der Messsignale an die erste Antriebselektronik (9) und an die zweite Antriebselektronik (10) übermittelt.
56. Antriebssystem nach einem der Aspekte 52 bis 55, dadurch gekennzeichnet, dass die erste Antriebselektronik (9) und die zweite Antriebselektronik (10) unterschiedliche Regelungsalgorithmen aufweisen.
57. Lenkung, insbesondere PKW-Lenkung oder LKW-Lenkung, die wenigstens ein Elektromotorsystem (1) nach einem der Aspekte 1 bis 51 oder ein Antriebssystem nach einem der Aspekte 52 bis 56 aufweist.
58. Lenkung nach Aspekt 57, dadurch gekennzeichnet, dass die Lenkung eine Servolenkung und/oder eine Überlagerungslenkung und/oder eine Steer-by-Wire-Lenkung ist.
59. Fahrwerk, insbesondere aktives Fahrwerk für ein Kraftfahrzeug, das wenigstens ein Elektromotorsystem (1) nach einem der Aspekte 1 bis 51 oder ein Antriebssystem nach einem der Aspekte 52 bis 56 aufweist.
60. Roboter, insbesondere Industrieroboter, beinhaltend wenigstens ein Elektromotorsystem (1) nach einem der Aspekte 1 bis 51 oder ein Antriebssystem nach einem der Aspekte 52 bis 56.
61. Robotergelenk, das wenigstens ein Elektromotorsystem (1) nach einem der Aspekte 1 bis 51 oder ein Antriebssystem nach einem der Aspekte 52 bis 56 aufweist.
62. Flugzeug, insbesondere Fly-by-Wire-Flugzeug, das wenigstens ein Elektromotorsystem (1) nach einem der Aspekte 1 bis 51 oder ein Antriebssystem nach einem der Aspekte 52 bis 56 aufweist.
63. Fahrzeug, das wenigstens ein Elektromotorsystem (1) nach einem der Aspekte 1 bis 51 oder ein Antriebssystem nach einem der Aspekte 52 bis 56 aufweist.
64. Fahrzeug nach Aspekt 62, dadurch gekennzeichnet, dass das Fahrzeug mehrere Elektromotorsysteme (1) nach einem der Aspekte 1 bis 51 aufweist, wobei die Elektromotorsysteme (1) unterschiedliche Antriebsräder und/oder unterschiedliche Antriebsachsen des Fahrzeuges antreiben.
65. Baumaschine, die wenigstens ein Elektromotorsystem (1) nach einem der Aspekte 1 bis 51 oder ein Antriebssystem nach einem der Aspekte 52 bis 56 aufweist.
66. Verwendung eines Elektromotorsystems (1) nach einem der Aspekte 1 bis 51 als Generatorsystem.

In den Zeichnungen ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Elektromotorsystems,
- Fig. 2: ein zweites Ausführungsbeispiel eines erfindungsgemäßen Elektromotorsystems,
- Fig. 3: eine Detailansicht einer Anschlussbaugruppe eines erfindungsgemäßen Elektromotorsystems,
- Fig. 4: ein drittes Ausführungsbeispiel eines erfindungsgemäßen Elektromotorsystems ohne eine Darstellung der Anschlussbaugruppe,
- Fig. 5: ein Ausführungsbeispiel eines Elektroblechs für einen geblechten Statorkern eines erfindungsgemäßen Elektromotorsystems in der Draufsicht,
- Fig. 6: ein Ausführungsbeispiel eines geblechten Statorkerns eines erfindungsgemäßen Elektromotorsystems in einer Seitenansicht,
- Fig. 7: ein Statorkernsegment eines Ausführungsbeispiels eines Statorkerns eines erfindungsgemäßen Elektromotorsystems in einer perspektivischen Ansicht,
- Fig. 8: ein Ausführungsbeispiel eines Ausführungsbeispiels eines Statorkerns eines erfindungsgemäßen Elektromotorsystems in einer perspektivischen Ansicht,
- Fig. 9: ein Ausführungsbeispiel eines erfindungsgemäßen Antriebssystems
- Fig. 10: ein zweites Ausführungsbeispiel eines Elektroblechs für einen geblechten Statorkern eines erfindungsgemäßen Elektromotorsystems in der Draufsicht, und
- Fig. 11: ein drittes Ausführungsbeispiel eines Elektroblechs für einen geblechten Statorkern eines erfindungsgemäßen Elektromotorsystems in der Draufsicht.

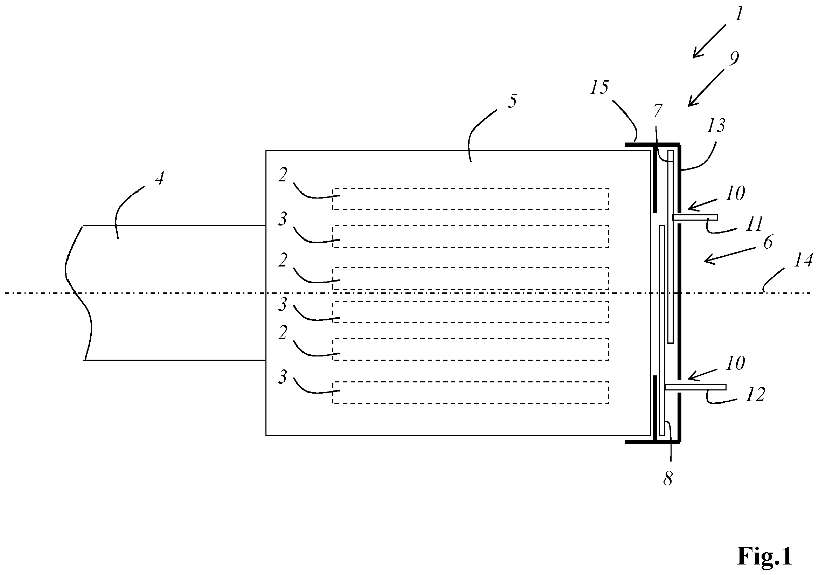

Fig. 1 zeigt in einer ganz schematischen Darstellung ein erstes Ausführungsbeispiel eines erfindungsgemäßen Elektromotorsystems 1.

Das Elektromotorsystem 1 beinhaltet einen ersten Elektromotor, der erste Statorspulen 2 aufweist, und beinhaltet außerdem einen zweiten Elektromotor, der zweite Statorspulen 3 aufweist. Der erste Elektromotor und der zweite Elektromotor weisen denselben permanentmagnetischen (in dieser Figur nicht dargestellten) Rotor 4 auf. Der erste Elektromotor und der zweite Elektromotor weisen außerdem denselben Statorkern 5 auf, der die ersten und zweiten Statorspulen 2, 3 trägt.

Das Elektromotorsystem 1 beinhaltet außerdem eine einstückige Anschlussbaugruppe 6, die mehrere voneinander elektrisch isolierte erste und zweite Stromschienen 7, 8 aufweist, wobei an jede der Stromschienen 7, 8 wenigstens zwei der ersten Statorspulen 2 oder wenigstens zwei der zweiten Statorspulen 3 elektrisch leitend angeschlossen sind. Der besseren Übersichtlichkeit halber sind in die Figur nur eine der ersten Stromschienen 7 und nur eine der zweiten Stromschienen 8 eingezeichnet.

An jede der ersten Stromschienen 7 sind wenigstens zwei der ersten Statorspulen 2 elektrisch leitend angeschlossen. An jede der zweiten Stromschienen 8 sind wenigstens zwei der zweiten Statorspulen 3 elektrisch leitend angeschlossen.

Vorzugsweise ist jeder der Elektromotore als Dreiphasenmotor ausgebildet, wobei jeweils vier Stromschienen 7, 8 (also insgesamt acht Stromschienen) vorhanden sein können, nämlich jeweils drei für die drei Phasen und jeweils eine für den Sternpunkt. In der Figur 1 sind, wie bereits erwähnt, der besseren Übersichtlichkeit halber jedoch lediglich zwei Stromschienen 7, 8 eingezeichnet.

Die einstückige Baugruppe 6 weist eine aus einem elektrisch isolierenden Material hergestellte Einhausung 9 auf, die die ersten und zweiten Stromschienen 7, 8 einhaust.

Die Einhausung 9 weist mehrere voneinander beabstandete Öffnungen 10 auf, durch die erste elektrisch leitende Anschlusselemente 11 verlaufen, von denen jedes über eine der ersten Stromschienen 7 elektrisch leitend mit wenigstens einer der ersten Statorspulen 2 verbunden ist.

Die Einhausung 9 weist außerdem mehrere voneinander beabstandete Öffnungen 10 auf, durch die zweite elektrisch leitende Anschlusselemente 12 verlaufen, von denen jedes über eine der zweiten Stromschienen 8 elektrisch leitend mit wenigstens einer der zweiten Statorspulen 3 verbunden ist.

Die Einhausung 9 weist eine Deckelwandung 13 auf, die sich in radialer Richtung erstreckt und die senkrecht zur Axialrichtung 14 angeordnet ist. Die Einhausung 9 weist außerdem einen an der Deckelwandung 13 angeordneten Rohrabschnitt 15 auf.

Die Öffnungen 10, durch die die elektrisch leitenden Anschlusselemente 11, 12 verlaufen, können sich vorteilhaft in axialer Richtung erstrecken.

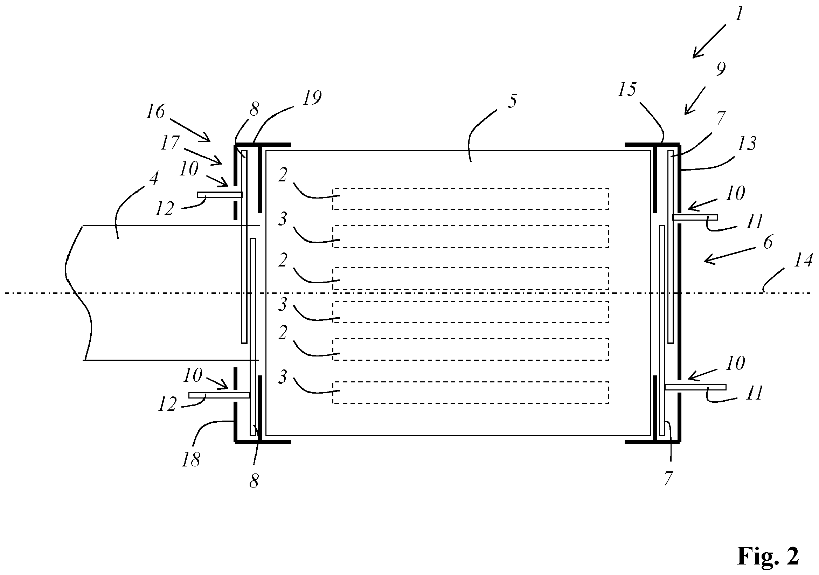

Fig. 2 zeigt in einer ganz schematischen Darstellung ein zweites Ausführungsbeispiel eines erfindungsgemäßen Elektromotorsystems 1.

Das Elektromotorsystem 1 beinhaltet einen ersten Elektromotor, der erste Statorspulen 2 aufweist, und beinhaltet außerdem einen zweiten Elektromotor, der zweite Statorspulen 3 aufweist. Der erste Elektromotor und der zweite Elektromotor weisen denselben permanentmagnetischen (in dieser Figur nicht dargestellten) Rotor 4 auf. Der erste Elektromotor und der zweite Elektromotor weisen außerdem denselben Statorkern 5 auf, der die ersten und zweiten Statorspulen 2, 3 trägt.

Das Elektromotorsystem 1 beinhaltet außerdem eine einstückige Anschlussbaugruppe 6, die mehrere voneinander elektrisch isolierte erste Stromschienen 7 aufweist, wobei an jede der ersten Stromschienen 7 wenigstens zwei der ersten Statorspulen 2 elektrisch leitend angeschlossen sind. Der besseren Übersichtlichkeit halber sind in die Figur nur zwei der ersten Stromschienen 7 eingezeichnet.

Die einstückige Baugruppe 6 weist eine aus einem elektrisch isolierenden Material hergestellte Einhausung 9 auf, die die ersten Stromschienen 7 einhaust.

Die Einhausung 9 weist mehrere voneinander beabstandete Öffnungen 10 auf, durch die erste elektrisch leitenden Anschlusselemente 11 verlaufen, von denen jedes über eine der ersten Stromschienen 7 elektrisch leitend mit wenigstens einer der ersten Statorspulen 2 verbunden ist.

Die Einhausung 9 weist eine Deckelwandung 13 auf, die sich in radialer Richtung erstreckt und die senkrecht zur Axialrichtung 14 angeordnet ist. Die Einhausung 9 weist außerdem einen an der Deckelwandung 13 angeordneten Rohrabschnitt 15 auf.

Die Öffnungen 10, durch die die ersten elektrisch leitenden Anschlusselemente 11 verlaufen, können sich vorteilhaft in axialer Richtung erstrecken.

Das Elektromotorsystem 1 beinhaltet außerdem eine weitere einstückige Anschlussbaugruppe 16, die ringförmig ausgebildet ist und die mehrere voneinander elektrisch isolierte zweite Stromschienen 8 aufweist, wobei an jede der zweiten Stromschienen 8 wenigstens zwei der zweiten Statorspulen 3 elektrisch leitend angeschlossen sind. Der besseren Übersichtlichkeit halber sind in die Figur nur zwei der zweiten Stromschienen 8 eingezeichnet.

Die weitere einstückige Baugruppe 16 weist eine aus einem elektrisch isolierenden Material hergestellte weitere Einhausung 17 auf, die die zweiten Stromschienen 8 einhaust.

Die weitere Einhausung 17 weist mehrere voneinander beabstandete Öffnungen 10 auf, durch die zweite elektrisch leitenden Anschlusselemente 12 verlaufen, von denen jedes über eine der zweiten Stromschienen 8 elektrisch leitend mit wenigstens einer der zweiten Statorspulen 3 verbunden ist.

Die weitere Einhausung 17 weist eine weitere Deckelwandung 18 auf, die sich in radialer Richtung erstreckt und die senkrecht zur Axialrichtung 14 angeordnet ist. Die weitere Einhausung 17 weist außerdem einen an der Deckelwandung 18 angeordneten weiteren Rohrabschnitt 19 auf.

Die Öffnungen 10, durch die die zweiten elektrisch leitenden Anschlusselemente 12 verlaufen, können sich vorteilhaft in axialer Richtung erstrecken.

Vorzugsweise ist jeder der Elektromotore als Dreiphasenmotor ausgebildet, wobei jeweils vier Stromschienen (also insgesamt acht Stromschienen) vorhanden sein können, nämlich jeweils drei für die drei Phasen und jeweils eine für den Sternpunkt. In der Figur 2 sind, wie bereits erwähnt, der besseren Übersichtlichkeit halber jedoch lediglich jeweils zwei der ersten und zweiten Stromschienen 7, 8 eingezeichnet.

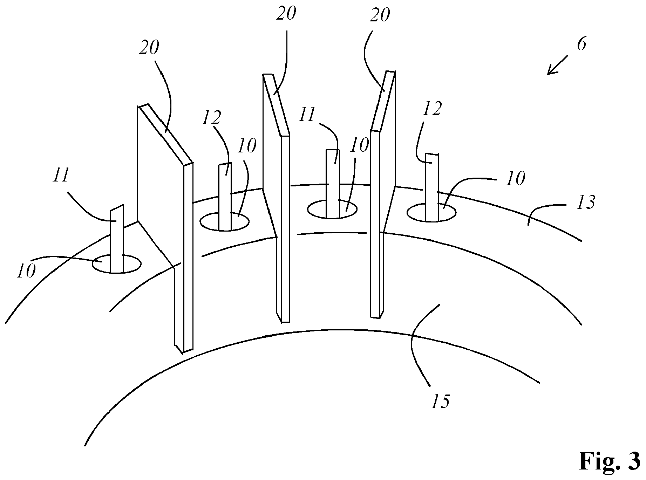

Fig. 3 zeigt eine Detailansicht einer Anschlussbaugruppe 6 eines erfindungsgemäßen Elektromotorsystems. Die Anschlussbaugruppe 6 ist ringförmig ausgebildet und weist mehrere voneinander beabstandete Öffnungen 10 auf, durch die erste elektrisch leitende Anschlusselemente 11 und zweite elektrisch leitende Anschlusselemente 12 (oder alternativ ausschließlich erste Anschlusselemente 11 oder ausschließlich zweite elektrisch leitende Anschlusselemente 12) verlaufen. Durch jede Öffnung 10 verläuft nur ein einziges der Anschlusselemente 11, 12.

Die Anschlussbaugruppe 6 weist zwischen den Öffnungen 10 angeordnete Abschirmwände 20 aus einem elektrisch nicht leitenden Material auf. Die Abschirmwände 20 ragen u.a. in dieselbe Richtung, wie die jeweils benachbarten elektrisch leitenden Anschlusselemente 11, 12. Die Abschirmwände 20 stehen in axialer und radialer Richtung über die elektrisch leitenden Anschlusselemente 8, 10 vor.

Die Abschirmwände 20 sind senkrecht zur Deckelwandung 13 und radial zu einem Rohrabschnitt 15 angeordnet.

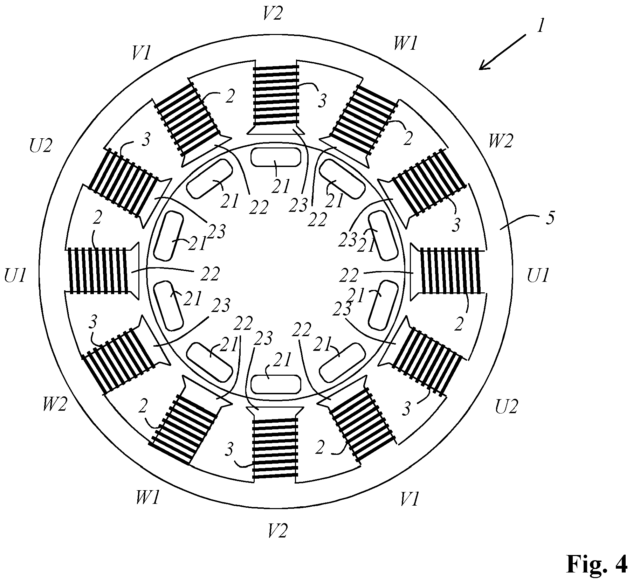

Fig. 4 zeigt ein drittes Ausführungsbeispiel eines erfindungsgemäßen Elektromotorsystems 1 ohne die Einhausung. Das Elektromotorsystem 1 beinhaltet einen ersten Elektromotor, der erste Statorspulen 2 aufweist, und beinhaltet außerdem einen zweiten Elektromotor, der zweite Statorspulen 3 aufweist. Der erste Elektromotor und der zweite Elektromotor weisen denselben permanentmagnetischen Rotor 4 auf, der mehrere Permanentmagnete 21 aufweist. Der erste Elektromotor und der zweite Elektromotor weisen außerdem denselben geblechten Statorkern 5 auf, der mehrere erste Wickelzähne 22, auf die ausschließlich die ersten Statorspulen 2 gewickelt sind, und mehrere zweite Wickelzähne 23, auf die ausschließlich die zweiten Statorspulen 3 gewickelt sind, aufweist.

Der Statorkern 5 weist bei diesem Ausführungsbeispiel sechs erste Wickelzähne 22 und sechs zweite Wickelzähne 23 auf.

Der erste Elektromotor ist als Dreiphasenmotor ausgebildet, wobei jeweils zwei um 180 Grad gegenüberliegenden ersten Statorspulen 2 (paarweise) dieselbe Phase U1, V1 und W1 zugeordnet ist. Die ersten Statorspulen 2 derselben Phase U1, V1, W1 können in Reihe oder parallel geschaltet sein. Der zweite Elektromotor ist ebenfalls als Dreiphasenmotor ausgebildet, wobei jeweils zwei um 180 Grad gegenüberliegenden zweiten Statorspulen 3 dieselbe Phase U2, V2 und W2 zugeordnet sind. Die zweiten Statorspulen 3 derselben Phase können in Reihe oder parallel geschaltet sein. Die Zuordnung der Phasen der ersten Statorspulen 2 ist zu der Zuordnung der Phasen der zweiten Statorspulen 3 im Uhrzeigersinn um 30 Grad (360 Grad dividiert durch 12, nämlich die Anzahl der ersten und zweiten Wickelzähne) drehversetzt. Die erforderlichen elektrischen Verbindungen der Statorspulen 2, 3 können vorteilhaft durch (nicht dargestellte) Stromschienen 7, 8 hergestellt sein, wobei insbesondere vorteilhaft vorgesehen sein kann, dass die ersten Stromschienen 7 des ersten Elektromotors und die zweiten Stromschienen 8 des zweiten Elektromotors räumlich getrennt auf unterschiedlichen axialen Seiten des Statorkerns 5 angeordnet sind. Es ist allerdings auch möglich, dass die ersten Stromschienen 7 des ersten Elektromotors und die zweiten Stromschienen 8 des zweiten Elektromotors auf derselben axialen Stirnseite des Statorkerns 5 angeordnet sind.

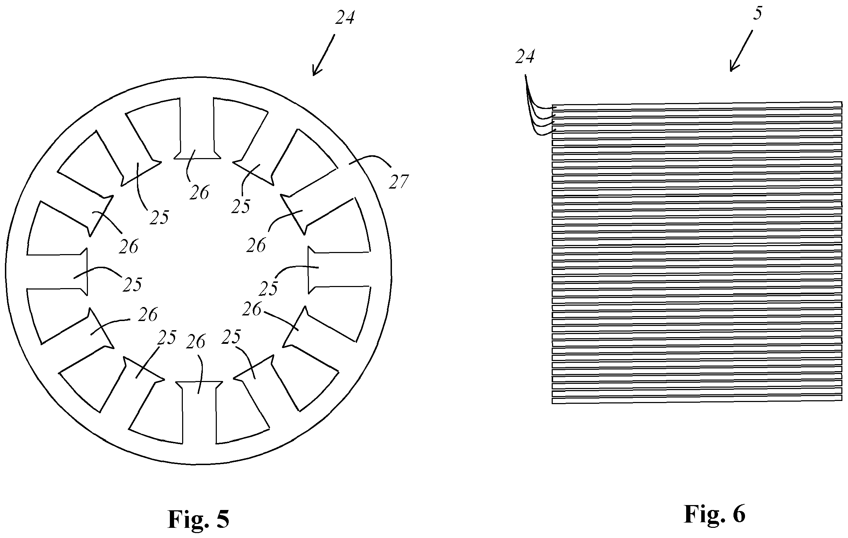

Fig. 5 zeigt ein Ausführungsbeispiel eines Elektroblechs 24 für einen geblechten Statorkern 5 eines erfindungsgemäßen Elektromotorsystems 1 in der Draufsicht. Das Elektroblech 24 ist dazu bestimmt, mit weiteren gleichen Elektroblechen 24 einen Stapel von Elektroblechen 24 und damit einen Statorkern 5 zu bilden, wie er in Figur 6 in einer Seitenansicht dargestellt ist.

Das Elektroblech 24 weist erste Abschnitte 25 auf, die dazu bestimmt sind, Bestandteil der ersten Wickelzähne 22 zu sein. Das Elektroblech 24 weist außerdem zweite Abschnitte 26 auf, die dazu bestimmt sind, Bestandteil der zweiten Wickelzähne 23 zu sein. Das Elektroblech 24 weist darüber hinaus einen ringförmigen Abschnitt 27 auf, an dessen Innenumfang die ersten Abschnitte 25 und zweiten Abschnitte 26 umlaufend abwechselnd angeordnet sind.

Das Elektroblech 24 ist einstückig, beispielsweise durch einen Stanzvorgang, hergestellt. Das Elektroblech 24 ist mit einem elektrischen isolierenden Isoliermittel überzogen.

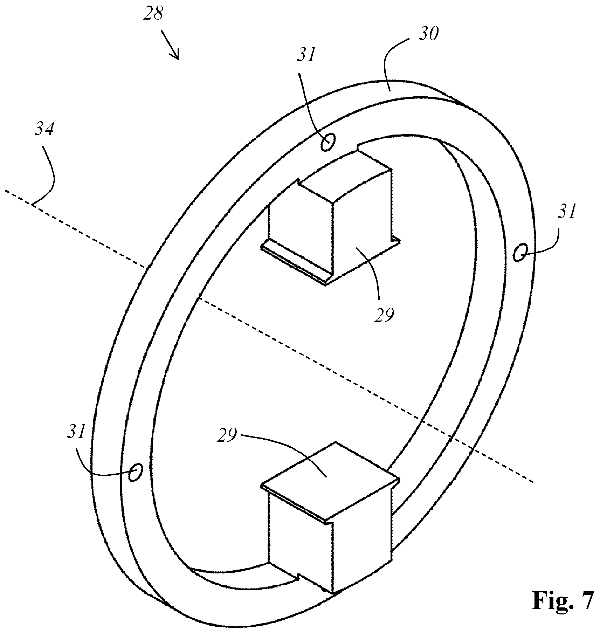

Fig. 7 zeigt ein Statorkernsegment 28 eines Ausführungsbeispiels eines aus zwei derartigen Statorkernsegmenten 28, 33 zusammengesetzten Statorkerns 5 in einer perspektivischen Ansicht. Das Statorkernsegment 28 weist zwei radial ausgerichtete Wickelzähne 29 auf, auf die jeweils wenigstens eine Statorspule 2, 3 gewickelt werden kann. Das Statorkernsegment 28 weist ein Trägerelement 30 auf, an dem die Wickelzähne 29 angeordnet sind. Das Trägerelement 30 ist als Ring ausgebildet. Die Wickelzähne 29 sind axial länger als das Trägerelement 30. Konkret sind die Wickelzähne 29 axial etwas mehr als doppelt so lang wie das als Ring ausgebildete Trägerelement 30.

Das Trägerelement 30 weist mehrere Befestigungselemente 31 auf, die als Durchgangsbohrungen ausgebildet sind und die dazu dienen, das Statorkernsegment 28 mit einem weiteren Statorkernsegment 30 und mit einer Trennvorrichtung 32 zu verbinden.

Das dargestellte Statorkernsegment 28 könnte ohne weiteres auch komplizierter ausgebildet sein und/oder eine größere Anzahl von Wickelzähnen 29 aufweisen. Allerdings ist das dargestellte Ausführungsbeispiel besonders übersichtlich, um eine Grundidee der Erfindung zu illustrieren.

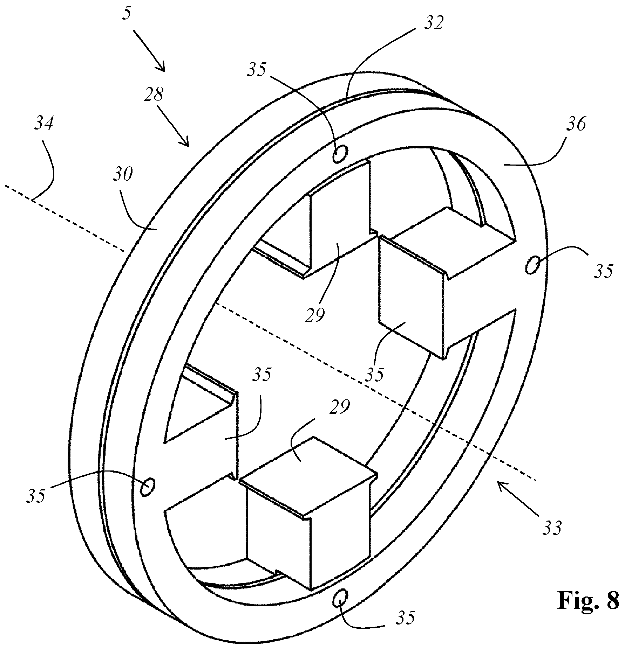

Fig. 8 zeigt ein Ausführungsbeispiel eines Ausführungsbeispiels eines Statorkerns 5 eines erfindungsgemäßen Elektromotorsystems in einer perspektivischen Ansicht. Der Statorkern 5 beinhaltet das in Fig. 7 dargestellte Statorkernsegment 28 und ein weiteres Statorkernsegment 33, das gleich ausgebildet ist wie das in der Fig. 7 dargestellte Statorkernsegment 28. Das Statorkernsegment 28 und das weitere Statorkernsegment 33 sind einander entgegengesetzt ausgerichtet und bezogen auf die Rotationsachse 34 um 90 Grad drehversetzt zueinander angeordnet.

Das weitere Statorkernsegment 33 weist zwei radial ausgerichtete weitere Wickelzähne 35 auf, auf die jeweils wenigstens eine Statorspule 2, 3 gewickelt werden kann. Das weitere Statorkernsegment 33 weist außerdem ein weiteres Trägerelement 36 auf, an dem die weiteren Wickelzähne 35 angeordnet sind. Das weitere Trägerelement 36 ist als Ring ausgebildet. Die weiteren Wickelzähne 35 sind axial länger als das weitere Trägerelement 36. Konkret sind die weiteren Wickelzähne 35 axial etwas mehr als doppelt so lang wie das als Ring ausgebildete weitere Trägerelement 36.

Die elektrisch isolierende Trennvorrichtung 32 ist axial zwischen dem Statorkernsegment 28 und dem weiteren Statorkernsegment 33 angeordnet.

Das weitere Trägerelement 36 weist mehrere weitere Befestigungselemente 37 auf, die als Durchgangsbohrungen ausgebildet sind und die dazu dienen, das weitere Statorkernsegment 33 mit dem Statorkernsegment 28 und mit der Trennvorrichtung 32 zu verbinden. Die als Durchgangsbohrungen ausgebildeten Befestigungselemente 31 und die als Durchgangsbohrungen ausgebildeten weiteren Befestigungselemente 37 fluchten miteinander, so dass sie mittels eines zusätzlichen (nicht dargestellten) Befestigungselements, beispielsweise mittels hindurch verlaufenden Schrauben oder mit hindurch verlaufenden Bolzen, miteinander verbunden werden können.

Die axiale Mittelachse des Statorkerns 5 definiert eine Rotationsachse 34 für einen (in den Figuren 7 und 8 nicht dargestellten) Rotor 4.

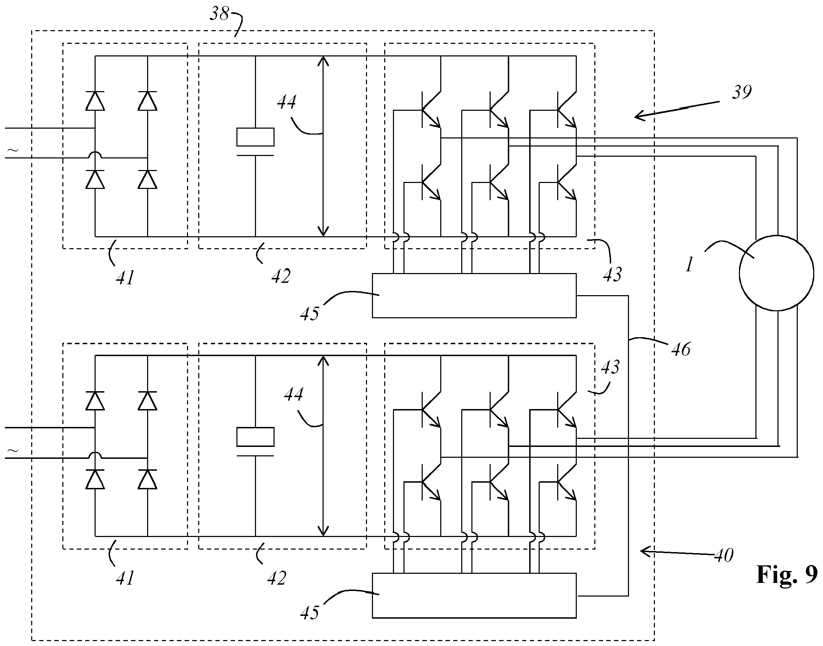

Fig. 9 zeigt ein Ausführungsbeispiel eines erfindungsgemäßen Antriebssystems, das ein Elektromotorsystem 1 sowie eine elektronische Steuerungsvorrichtung 38 mit einer die erste Antriebselektronik 39 und zweite Antriebselektronik 40 beinhaltet.

Jede der Antriebselektroniken 39, 40 weist einen Eingangsstromrichter 41, einen Zwischenkreis 42 und einen Ausgangsstromrichter 43 auf. An einen der Ausgangsstromrichter 43, der jeweils mehrere Transistorgruppen beinhaltet, sind die ersten Statorspulen 2 des Elektromotorsystems 1 angeschlossen. An den anderen der Ausgangsstromrichter 43, der jeweils mehrere Transistorgruppen beinhaltet, sind die zweiten Statorspulen 3 des Elektromotorsystems 1 angeschlossen.

In dem Zwischenkreis 42 liegt eine Zwischenkreisspannung 44 an, die bei diesem Ausführungsbeispiel die Betriebsspannung ist.

Jede der Antriebselektroniken 39, 40 weist eine Transistorgruppensteuerung 45 zur Steuerung des Ausgangsstromrichters 43 auf.

Die Transistorgruppensteuerungen 45 sind über eine Synchronisationsleitung 46 miteinander verbunden und zueinander synchronisiert.

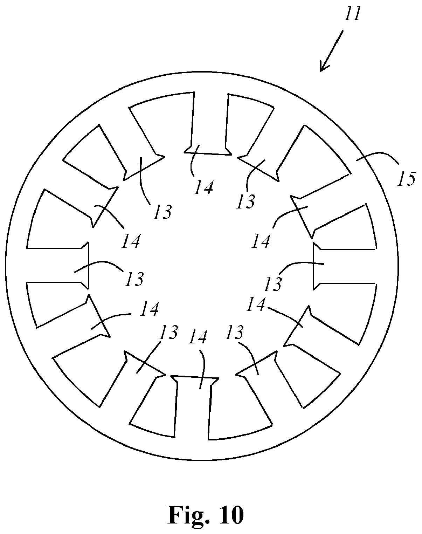

Figur 10 zeigt ein zweites Ausführungsbeispiel eines Elektroblechs 11 für einen geblechten Statorkern 12 eines erfindungsgemäßen Elektromotorsystems in der Draufsicht.

Das Elektroblech 11 ist dazu bestimmt, mit weiteren gleichen Elektroblechen 11 einen Stapel von Elektroblechen 11 und damit einen Statorkern 12 zu bilden.

Das Elektroblech 11 weist erste Abschnitte 13 auf, die dazu bestimmt sind, Bestandteil der ersten Wickelzähne 6 zu sein. Das Elektroblech 11 weist außerdem zweite Abschnitte 14 auf, die dazu bestimmt sind, Bestandteil der zweiten Wickelzähne 7 zu sein. Das Elektroblech 11 weist darüber hinaus einen ringförmigen Abschnitt 15 auf, an dessen Innenumfang die ersten Abschnitte 13 und zweiten Abschnitte 14 umlaufend abwechselnd angeordnet sind.

Zwischen zwei ersten Statorspulen (2) ist jeweils eine zweite Statorspule (3) angeordnet, wobei die Abstände der ersten Statorspulen (2) zu den unmittelbar benachbarten zweiten Statorspulen (3) jeweils verschieden sind.

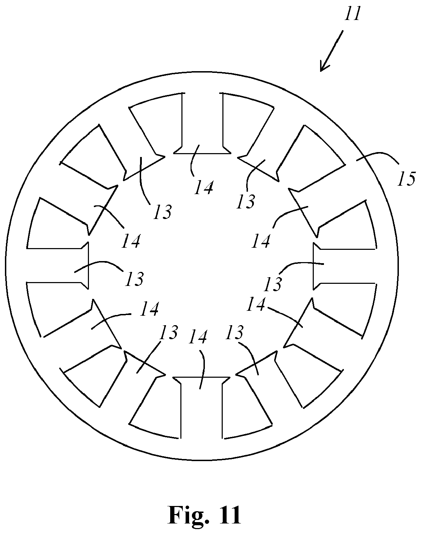

Figur 11 zeigt ein drittes Ausführungsbeispiel eines Elektroblechs 11 für einen geblechten Statorkern 12 eines erfindungsgemäßen Elektromotorsystems in der Draufsicht.

Das Elektroblech 11 ist dazu bestimmt, mit weiteren gleichen Elektroblechen 11 einen Stapel von Elektroblechen 11 und damit einen Statorkern 12 zu bilden.

Das Elektroblech 11 weist erste Abschnitte 13 auf, die dazu bestimmt sind, Bestandteil der ersten Wickelzähne 6 zu sein. Das Elektroblech 11 weist außerdem zweite Abschnitte 14 auf, die dazu bestimmt sind, Bestandteil der zweiten Wickelzähne 7 zu sein. Das Elektroblech 11 weist darüber hinaus einen ringförmigen Abschnitt 15 auf, an dessen Innenumfang die ersten Abschnitte 13 und zweiten Abschnitte 14 umlaufend abwechselnd angeordnet sind.

Zwischen zwei ersten Statorspulen (2) ist jeweils eine zweite Statorspule (3) angeordnet, was jedoch nicht zwingend so sein muss.

Die ersten Wickelzähne (6) sind zu den zweiten Wickelzähen (7) hinsichtlich der Größe ungleich ausgebildet.

### Bezugszeichenliste:

- 1: Elektromotorsystem
- 2: erste Statorspule
- 3: zweite Statorspule
- 4: Rotor
- 5: Statorkern
- 6: Anschlussbaugruppe
- 7: erste Stromschiene
- 8: zweite Stromschiene
- 9: Einhausung
- 10: Öffnung
- 11: erste elektrisch leitendes Anschlusselement
- 12: zweite elektrisch leitendes Anschlusselement
- 13: Deckelwandung
- 14: Axialrichtung
- 15: Rohrabschnitt
- 16: weitere einstückige Anschlussbaugruppe
- 17: weitere Einhausung
- 18: weitere Deckelwandung
- 19: weiterer Rohrabschnitt
- 20: Abschirmwand
- 21: Permanentmagnet
- 22: erster Wickelzahn
- 23: zweiter Wickelzahn
- 24: Elektroblech
- 25: erster Abschnitt
- 26: zweiter Abschnitt
- 27: ringförmiger Abschnitt
- 28: Statorkernsegment
- 29: Wickelzahn
- 30: Trägerelement
- 31: Befestigungselement
- 32: Trennvorrichtung
- 33: weiteres Statorkernsegment
- 34: Rotationsachse
- 35: weiterer Wickelzahn
- 36: weiteres Trägerelement
- 37: weiteres Befestigungselement
- 38: Steuerungsvorrichtung
- 39: erste Antriebselektronik
- 40: zweite Antriebselektronik
- 41: Eingangsstromrichter
- 42: Zwischenkreis
- 43: Ausgangsstromrichter
- 44: Zwischenkreisspannung
- 45: Transistorgruppensteuerung
- 46: Synchronisationsleitung

## Patentansprüche

1. Elektromotorsystem (1) beinhaltend wenigstens einen ersten und einen zweiten Elektromotor, wobei der erste Elektromotor erste Statorspulen (2) aufweist und der zweite Elektromotor zweite Statorspulen (3) aufweist und wobei der erste Elektromotor und der zweite Elektromotor denselben Statorkern (5) haben, der die ersten und zweiten Statorspulen (2, 3) trägt, **dadurch gekennzeichnet, dass** eine einstückige Anschlussbaugruppe (6) mehrere voneinander elektrisch isolierte Stromschienen (7, 8) aufweist, wobei an jede der Stromschienen (7, 8) wenigstens zwei der ersten Statorspulen (2) oder wenigstens zwei der zweiten Statorspulen (3) elektrisch leitend angeschlossen sind.

2. Elektromotorsystem (1) nach Anspruch 1, **dadurch gekennzeichnet, dass**
a. unter den Stromschienen (7, 8) mehrere erste Stromschienen (7) vorhanden sind, wobei an jede der ersten Stromschienen (7) wenigstens zwei der ersten Statorspulen (2) elektrisch leitend angeschlossen sind, und dass unter den Stromschienen (7, 8) mehrere zweite Stromschienen (8) vorhanden sind, wobei an jede der zweiten Stromschienen (8) wenigstens zwei der zweiten Statorspulen (2) elektrisch leitend angeschlossen sind, oder dass
b. unter den Stromschienen (7, 8) ausschließlich mehrere erste Stromschienen (7) vorhanden sind, wobei an jede der ersten Stromschienen (7) wenigstens zwei der ersten Statorspulen (2) elektrisch leitend angeschlossen sind, und dass eine weitere einstückige Anschlussbaugruppe (16) ausschließlich mehrere zweite Stromschienen (8) aufweist, wobei an jede der zweiten Stromschienen (8) wenigstens zwei der zweiten Statorspulen (3) elektrisch leitend angeschlossen sind.

3. Elektromotorsystem (1) nach Anspruch 1 oder 2, **dadurch gekennzeichnet, dass**
a. die einstückige Baugruppe (6) eine aus einem elektrisch isolierenden Material hergestellte Einhausung (9) aufweist, die die Stromschienen (7, 8) einhaust, insbesondere eine Einhausung (9), die mehrere voneinander beabstandete Öffnungen (10) aufweist, durch die jeweils elektrisch leitende Anschlusselemente (11, 12) verlaufen, von denen jedes elektrisch leitend mit einer der Stromschienen (7, 8) verbunden ist, und/oder dass
b. die weitere einstückige Anschlussbaugruppe (16) eine aus einem elektrisch isolierenden Material hergestellte weitere Einhausung (17) aufweist, die die zweiten Stromschienen (8) einhaust, insbesondere eine weitere Einhausung (17), die mehrere voneinander beabstandete Öffnungen (10) aufweist, durch die zweiten elektrisch leitende Anschlusselemente (12) verlaufen, von denen jedes elektrisch leitend mit einer der zweiten Stromschienen (8) verbunden ist.

4. Elektromotorsystem (1) nach Anspruch 3, **dadurch gekennzeichnet, dass** das Elektromotorsystem (1) wenigstens eines der folgenden Merkmale aufweist:
a. der Statorkern (5) ist axial zwischen der Einhausung (9) und der weiteren Einhausung (17) angeordnet ist und/oder dass der Statorkern (5) axial zwischen der ersten und zweiten Anschlussbaugruppe (6, 16) angeordnet,
b. die Öffnungsfläche jeder Öffnung (10) ist jeweils genauso groß, wie die Querschnittsfläche des durch sie hindurch verlaufenden Anschlusselements (11, 12) in der Öffnungsebene oder jede Öffnung (10) ist höchstens 10 mal, insbesondere höchstens 5 mal, so groß, wie die Querschnittsfläche des durch sie hindurch verlaufenden Anschlusselements (11, 12) in der Öffnungsebene,
c. die Einhausung (9) ist durch Eingießen der Stromschienen (7, 8) mit dem elektrisch isolierenden Material hergestellt, wobei das elektrisch isolierende Material nach dem Eingießen ausgehärtet ist,
d. die weitere Einhausung (17) ist durch Eingießen der zweiten Stromschienen (7, 8) mit dem elektrisch isolierenden Material hergestellt, wobei das elektrisch isolierende Material nach dem Eingießen ausgehärtet ist,
e. die Einhausung (9) ist durch ein an den Stromschienen (7, 8) befestigtes Gehäuse gebildet,
f. die weitere Einhausung (17) ist durch ein an den zweiten Stromschienen (8) befestigtes Gehäuse gebildet.

5. Elektromotorsystem (1) nach einem der Ansprüche 1 bis 4, **dadurch gekennzeichnet, dass**
a. der Statorkern (5) mehrere erste Wickelzähne (6) aufweist, auf die ausschließlich die ersten Statorspulen (2) gewickelt sind, und mehrere zweite Wickelzähne (7) aufweist, auf die ausschließlich die zweiten Statorspulen (3) gewickelt sind, aufweist, und/oder dass
b. jede der ersten Statorspulen (2) jeweils ausschließlich auf einen einzigen ersten Wickelzahn (22) gewickelt sind und/oder dass jede der zweiten Statorspulen (3) jeweils ausschließlich auf einen einzigen zweiten Wickelzahn (23) gewickelt sind, und/oder dass
c. jeder erste Wickelzahn (22) ausschließlich eine einzige der ersten Statorspulen (2) trägt und/oder dass jeder zweite Wickelzahn (23) ausschließlich eine einzige der zweiten Statorspulen (3) trägt.

6. Elektromotorsystem (1) nach einem der Ansprüche 1 bis 5, **dadurch gekennzeichnet, dass**
a. der Statorkern (5) einen Stapel von Elektroblechen (24) beinhaltet, von denen jedes zumindest erste Abschnitte, die Bestandteil der ersten Wickelzähne (22) sind, und zweite Abschnitte, die Bestandteil der zweiten Wickelzähne (23) sind, aufweist, und/oder dass
b. der Statorkern (5) als einstückiger Stapel von, insbesondere gleichen, Elektroblechen (24) hergestellt ist, der nicht in einzelne Segmente von Wickelzähnen oder Gruppen von Wickelzähnen zerlegbar ist, ohne die Elektrobleche (24) zu zerstören.

7. Elektromotorsystem (1) nach einem der Ansprüche 1 bis 6, **dadurch gekennzeichnet, dass** die ersten Statorspulen (2) in eine erste elektrische Schaltung, insbesondere eine Sternschaltung oder eine Dreiecksschaltung, integriert sind und dass die zweiten Statorspulen (3) in eine von der ersten elektrischen Schaltung separate und/oder unabhängige zweite elektrische Schaltung, insbesondere eine Sternschaltung oder eine Dreiecksschaltung, integriert sind.

8. Elektromotorsystem (1) nach einem der Ansprüche 1 bis 7, **dadurch gekennzeichnet, dass** das Elektromotorsystem (1) wenigstens eines der nachfolgenden Merkmale aufweist:
a. der Rotor (4) ist durch ausschließliches Bestromen der ersten Statorspulen (2) zur Rotation antreibbar,
b. der Rotor (4) ist durch ausschließliches Bestromen der zweiten Statorspulen (3) zur Rotation antreibbar,
c. der Rotor (4) ist durch gleichzeitiges Bestromen der ersten Statorspulen (2) und der zweiten Statorspulen (3) zur Rotation antreibbar.

9. Elektromotorsystem (1) nach einem der Ansprüche 1 bis 8, **dadurch gekennzeichnet, dass** das Elektromotorsystem (1) wenigstens eines der nachfolgenden Merkmale aufweist:
a. die ersten Statorspulen (2) sind dazu ausgebildet, jeweils bei einer ersten Betriebsspannung, insbesondere bei einer Betriebsspannung über 350 Volt, insbesondere von 400 Volt oder von 800 Volt, und bei einer ersten Betriebsstromstärke betrieben zu werden,
b. die zweiten Statorspulen (3) dazu ausgebildet sind, jeweils bei einer zweiten Betriebsspannung, insbesondere bei einer Betriebsspannung über 350 Volt, insbesondere von 400 Volt oder von 800 Volt, und bei einer zweiten Betriebsstromstärke betrieben zu werden,
c. zwischen zwei ersten Statorspulen (2) ist jeweils eine zweite Statorspule (3) angeordnet,
d. zwischen zwei ersten Statorspulen (2) ist jeweils eine zweite Statorspule (3) angeordnet und die Abstände der ersten Statorspulen (2) zu den unmittelbar benachbarten zweiten Statorspulen (3) sind jeweils verschieden,
e. die Gesamtanzahl der ersten Statorspulen (2) ist von der Gesamtanzahl zweiten Statorspulen (3) verschieden,
f. die ersten Wickelzähne (6) sind zu den zweiten Wickelzähen (7), insbesondere hinsichtlich der Größe, ungleich ausgebildet.

10. Antriebssystem das ein Elektromotorsystem (1) nach einem der Ansprüche 1 bis 9 und eine elektronische Steuerungsvorrichtung aufweist, insbesondere eine Steuerungsvorrichtung (38), die eine erste Antriebselektronik (39) aufweist, die die Bestromung der ersten Statorspulen (2) steuert, und/oder die eine zweite Antriebselektronik (40) aufweist, die die Bestromung der zweiten Statorspulen (3) steuert.

11. Antriebssystem nach Anspruch 10, **dadurch gekennzeichnet, dass**
a. die erste Antriebselektronik (39) und die zweite Antriebselektronik (40) miteinander synchronisiert sind oder eine Synchronisierung einschaltbar ist, und/oder dass
b. der erste Elektromotor einen ersten Rotationslagesensor aufweist, der Messsignale an die erste Antriebselektronik (9) übermittelt, und dass der zweite Elektromotor einen zweiten Rotationslagesensor aufweist, der Messsignale an die zweite Antriebselektronik (10) übermittelt, und/oder dass
c. erste Elektromotor und der zweite Elektromotor einen gemeinsamen Rotationslagesensor aufweisen, der Messsignale an die erste Antriebselektronik (9) und an die zweite Antriebselektronik (10) übermittelt, und/oder dass
d. die erste Antriebselektronik (9) und die zweite Antriebselektronik (10) unterschiedliche Regelungsalgorithmen aufweisen.

12. Fahrzeugkomponente, die wenigstens ein Elektromotorsystem (1) nach einem der Ansprüche 1 bis 11 oder ein Antriebssystem nach Anspruch 10 oder 11 aufweist, insbesondere
a. Fahrzeugkomponente, die als Lenkung, insbesondere PKW-Lenkung, LKW-Lenkung, Servolenkung, Überlagerungslenkung und/oder Steer-by-Wire-Lenkung, ausgebildet ist, oder
b. Fahrzeugkomponente, die als Fahrwerk, insbesondere aktives Fahrwerk für ein Kraftfahrzeug, ausgebildet ist.

13. Roboter, insbesondere Industrieroboter, beinhaltend wenigstens ein Elektromotorsystem (1) nach einem der Ansprüche 1 bis 9 oder ein Antriebssystem nach Anspruch 10 oder 11, oder Robotergelenk beinhaltend wenigstens ein Elektromotorsystem (1) nach einem der Ansprüche 1 bis 9 oder ein Antriebssystem nach Anspruch 10 oder 11.

14. Baumaschine oder Fahrzeug, die bzw. das wenigstens ein Elektromotorsystem (1) nach einem der Ansprüche 1 bis 9 oder ein Antriebssystem nach Anspruch 10 oder 11 aufweist, insbesondere
a. Fahrzeug, das mehrere Elektromotorsysteme (1) nach einem der Ansprüche 1 bis 9 aufweist, wobei die Elektromotorsysteme (1) unterschiedliche Antriebsräder und/oder unterschiedliche Antriebsachsen des Fahrzeuges antreiben, oder
b. Flugzeug, insbesondere Fly-by-Wire-Flugzeug.

15. Verwendung eines Elektromotorsystems (1) nach einem der Ansprüche 1 bis 9 als Generatorsystem.
